# EUROPEAN PATENT APPLICATION

(11) **EP 4 847 192 A1**
(43) Date of publication of application: **02.12.2026**
(21) Application number: 26155871.2
(22) Date of filing: 02.02.2026
(51) Int. Cl.: B23P 19/06, B25B 23/00, B25B 23/14, B25B 23/10, B25F 5/02

(54) **TORQUE MECHANISM FOR A TORQUE GUN**

(30) Priority: 27.05.2025 US 202519219561
(71) Applicant: The Boeing Company, Arlington, VA 22202 (US)
(72) Inventor: FARRIS, David G., Arlington, 22202 (US)
(74) Representative: Bryn-Jacobsen, Caelia

(57) **Abstract**

A torque mechanism (102) for a torque gun (400) has a reaction arm (110) mountable to a torque gun housing (414). In addition, the torque mechanism (102) includes a rotatable disc assembly (170), having a drive disc (180) mountable to a torque gun drive shaft (422), a driven disc body (202) coaxially aligned with the drive disc (180), and an arc plate (230) interconnecting the drive disc (180) and the driven disc body (202). The torque mechanism (102) also includes a unidirectional nut clutch (204) containing a nut socket (206) configured to engage the driven nut (460), and the nut clutch (204) limits rotation of the nut socket (206) to a single direction relative to the disc assembly (170). In addition, the torque mechanism (102) includes a static disc body (242) fixedly coupled to the reaction arm (110), and containing a unidirectional stud clutch (246) containing a stud engagement element (260) configured to engage the stud (462), and the stud clutch (246) prevents rotation of the stud engagement element (260) in the same direction as the socket (206).

## Description

### FIELD

The present disclosure relates generally to fastener installations and, more particularly, to a torque mechanism for use with a torque gun for torquing a nut on an unrestrained stud fastener.

### BACKGROUND

Torque guns are commonly used for torquing (i.e., tightening) fasteners to specific torque levels. A reaction force is generated as the torque gun applies torque to each fastener. When torquing to relatively high torque levels, a torque multiplier is typically required. As a result, a torque reaction device is also needed to transfer the reaction force to a nearby reaction feature.

In certain fastener installations, it is necessary to torque a nut onto a stud while simultaneously holding the stud stationary, with access to both the nut and stud limited to the same side of the structure. A known torque reaction device used in this type of fastener installation is bulky, heavy, and requires multiple technicians to hold it in place during operation. In addition, this known torque reaction device is time-consuming to operate and has a relatively short service life. Furthermore, the known torque reaction device is often used with a pneumatic torque gun, which requires regular calibration checks that are costly and disrupt production flow.

Accordingly, there exists a need in the art for a torque mechanism capable of torquing fasteners while holding the stud stationary from the same end as the nut, and which avoids the drawbacks associated with the known torque reaction device mentioned above.

### SUMMARY

The above-noted needs associated with torquing fasteners are addressed by the present disclosure, which provides a torque mechanism for use with a torque gun. The torque mechanism includes a reaction arm configured to be mounted to a torque gun housing. In addition, the torque mechanism includes a rotatable disc assembly, having a drive disc configured to be mounted to a torque gun drive shaft, a driven disc body coaxially aligned with the drive disc, and an arc plate interconnecting the drive disc and driven disc body. The torque mechanism also includes a unidirectional nut clutch supported by the driven disc body and containing a nut socket configured to engage the driven nut. The nut clutch limits rotation of the nut socket to a single direction relative to the disc assembly. The torque mechanism also includes a static disc body located between the drive disc and the driven disc body, and which is fixedly coupled to the reaction arm. The torque mechanism additionally includes a unidirectional stud clutch supported by the static disc body, and which contains a stud engagement element configured to engage the stud. The stud clutch prevents rotation of the stud engagement element in the same direction as the nut socket when the reaction arm is engaged to an external reaction feature.

Also disclosed is a torquing system for torquing a driven nut on a stud of a driven fastener. The torquing system includes a torque gun having a torque gun housing and a torque gun drive shaft. In addition, the torquing system includes a torque mechanism comprising a reaction arm and a rotatable disc assembly. The reaction arm is mounted to the torque gun housing. The rotatable disc assembly includes a drive disc mounted to the torque gun drive shaft, a driven disc body coaxially aligned with the drive disc, and an arc plate interconnecting the drive disc and driven disc body. The torque mechanism additionally includes a unidirectional nut clutch supported by the driven disc body and which contains a nut socket configured to engage the driven nut, and the nut clutch limits rotation of the nut socket to a single direction relative to the disc assembly. The torque mechanism also includes a static disc body located between the drive disc and the driven disc body, and which is fixedly coupled to the reaction arm. In addition, the torque mechanism includes a unidirectional stud clutch supported by the static disc body and containing a stud engagement element configured to engage the stud. The stud clutch prevents rotation of the stud engagement element in the same direction as the nut socket when the reaction arm is engaged to an external reaction feature.

Also disclosed is a method of rotating a driven nut on a stud of a driven fastener. The method includes mounting a torque mechanism to a torque gun, by mounting a reaction arm to a torque gun body, and mounting a drive disc to a torque gun drive shaft. The drive disc is part of a disc assembly having a driven disc subassembly having a unidirectional nut clutch containing a nut socket. The method also includes coupling a static disc subassembly to the reaction arm, and the static disc subassembly has a unidirectional stud clutch containing a stud engagement element. Additionally, the method includes engaging the torque mechanism to a driven fastener by engaging the stud engagement element to the stud, and engaging the nut socket to the driven nut. Furthermore, the method includes rotating the driven nut, by rotating the torque gun drive shaft to cause rotation of the disc assembly, and transmitting rotation of the disc assembly to the nut socket via the nut clutch, which limits rotation of the nut socket to a single direction relative to the disc assembly. In addition, the method includes engaging the reaction arm to an external reaction feature, and preventing rotation of the stud in the same direction as the nut socket via the stud clutch and the reaction arm.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or the claims.
Figure 1 shows an example of an aircraft;
Figure 2 shows an example of a structure of the aircraft containing a plurality of fasteners, some of which requires torquing a nut onto a stud while simultaneously holding the stud stationary, with access to both the nut and stud limited to the same side of the structure;
Figure 3 is a magnified view of a pair of the fasteners of Figure 2, and also shown is an example of a torquing system as presently disclosed and comprising a torque gun and a torque mechanism for torquing one of the fasteners (e.g., a driven fastener) while an adjacent fastener (e.g., a reaction fastener) is used to react the torque generated when torquing the driven fastener;
Figure 4 shows the torquing system with the torque mechanism engaged to the driven fastener and the reaction fastener;
Figure 5 is a magnified view of the fasteners of Figures 3-4, which include the driven fastener and the reaction fastener, and showing the lower ends of each stud having a holding feature in the form of a hex-shaped cross section for holding the stud against rotation during torquing;
Figure 6 is a side view of the fasteners of Figure 5 showing the studs extending through the structure and the holding features on the lower ends of the studs;
Figure 7 is an end view of the torquing system of Figure 6 illustrating a nut socket of the torque mechanism configured to engage the driven nut of the driven fastener while a reaction cup of the torque mechanism engages the reaction nut of the reaction fastener;
Figure 8 shows the nut socket and the reaction cup engaged respectively to the driven nut and the reaction nut;
Figure 9 is a perspective view of the torque mechanism separated from the torque gun, and illustrating the torque gun having a torque gun engagement element in the form of a male spline, and the torque gun also includes a torque gun drive shaft;
Figure 10 is a bottom-up perspective view of the torquing system showing the torque mechanism separated from the torque gun;
Figure 11 is a bottom-up perspective view of the torque mechanism showing a female spline formed in a reaction arm and configured to engage with the male spline of the torque gun, and further illustrating a drive socket configured to engage with the torque gun drive shaft;
Figure 12 is a top-down perspective view of an example of the torque mechanism showing an arc plate of a disc assembly;
Figure 13 is another perspective view of the torque mechanism of Figure 12;
Figure 14 is a side view of the torque mechanism of Figure 12;
Figure 15 is a top view of the torque mechanism of Figure 12;
Figure 16 is a cross-sectional view of the torque mechanism taken along line 16-16 of Figure 15;
Figure 17 is an end view of the torque mechanism of Figure 12;
Figure 18 is a partially exploded view of the torque mechanism illustrating the reaction cup and the disc assembly separated from the reaction arm;
Figure 19 is a bottom-up perspective view of the torque mechanism of Figure 18;
Figure 20 shows the reaction cup separated away from a cup support fitting mounted on the reaction arm;
Figure 21 is a side view of the torque mechanism in which the reaction cup and the cup support fitting have been omitted;
Figure 22 is a perspective view of the torque mechanism of Figure 21;
Figure 23 is a section view of a driven disc subassembly taken along line 23-23 of the torque mechanism of Figure 21;
Figure 24 is a section view of a static disc subassembly taken along line 24-24 of the torque mechanism of Figure 21;
Figure 25 is a section view of a drive disc taken along line 25-25 of the torque mechanism of Figure 21;
Figure 26 is a partially exploded top-down perspective view of the torque mechanism illustrating the driven disc subassembly, the static disc subassembly, the drive disc, and the arc plate separated away from the reaction arm;
Figure 27 is a bottom-up perspective view of the torque mechanism of Figure 26;
Figure 28 is a partially exploded view showing the arc plate separated away from the drive disc and the driven disc subassembly;
Figure 29 is an exploded view showing the drive disc subassembly, the static disc subassembly, and the drive disc separated from each other;
Figure 30 is a sectional view of the driven disc subassembly taken along line 30-30 of Figure 29 and showing the driven disc containing a unidirectional nut clutch, which is limited to rotating the nut socket in a single direction indicated by the arrows;
Figure 31 is an exploded view of the driven disc subassembly;
Figure 32 is a perspective view of the unidirectional nut clutch comprising a plurality of sprag elements contained within a clutch frame and interconnected by a circumferential clutch spring;
Figure 33 is a sectional view of the static disc subassembly taken along line 33-33 of Figure 29 and showing the static disc containing a unidirectional stud clutch, which is oriented in a manner preventing rotation of the stud engagement element (e.g., the stud socket) in a same direction as the nut socket;
Figure 34 is an exploded view of the static disc subassembly;
Figure 35 is a perspective view of the unidirectional stud clutch;
Figure 36 shows electrical wires interconnecting the various components of a rotation control circuit integrated into the torque mechanism and the torque gun;
Figure 37 is a magnified view of a portion of the torque gun showing the electrical wires extending between the torque gun trigger, a mechanical limit switch, and an electrical disconnect of the rotation control circuit;
Figure 38 shows an example of a controller communicatively coupled to the torque gun;
Figure 39 is a top view of the torque mechanism prior to tightening (e.g., torquing) a reaction nut and in which the arc plate is at a start position, resulting in the activation of a 0-degree proximity sensor mounted on the reaction arm;
Figure 40 is a schematic illustration of the rotation control circuit in a first state in which the 0-degree proximity sensor is activated, causing activation of a 0-degree relay switch, which completes the electrical circuit to the torque gun trigger (i.e., on-off switch) to allow for rotation of the disc assembly in a first rotational direction when the torque gun trigger is engaged (e.g., the trigger button is pushed);
Figure 41 shows the torque mechanism in which the 0-degree proximity sensor is deactivated due to rotation of the arc plate away from the 0-degree proximity sensor;
Figure 42 shows the rotation control circuit in a second state with the 0-degree proximity sensor deactivated, causing deactivation of the 0-degree relay switch;
Figure 43 shows the torque mechanism in which the arc plate has arrived at an end position, resulting in activation of a 180-degree proximity sensor, which breaks the electrical circuit to the torque gun trigger, thereby halting rotation of the torque gun drive shaft;
Figure 44 shows the rotation control circuit in a third state with the 180-degree proximity sensor activated, causing activation of the 180-degree relay switch, which again completes the electrical circuit to the torque gun trigger (i.e., on-off switch), and further illustrating the activation of the mechanical limit switch due to operator-controlled movement of the torque gun forward-reverse switch for reversing the direction of the disc assembly to a second rotational direction opposite the first rotational direction;
Figure 45 shows the torque mechanism in which the 180-degree proximity sensor is deactivated due to rotation of the arc plate away from the 180-degree proximity sensor;
Figure 46 shows the rotation control circuit in the fourth state in which the 180-degree proximity sensor is deactivated due to rotation of the arc plate away from the 180-degree proximity sensor;
Figure 47 is a perspective view of an example of the torque mechanism in a loosening configuration for loosening a driven nut from a stud;
Figure 48 is a top view of the torque mechanism of Figure 47 showing the arc plate at a start position, causing the 0-degree proximity sensor to be activated by the circumferential edge of the arc plate;
Figure 49 shows the loosening configuration of the torque mechanism of Figure 48 illustrating the 0-degree proximity sensor deactivated due to rotation of the arc plate away from the 180-degree proximity sensor;
Figure 50 illustrates operations included in a method of torquing a driven nut on a stud of a driven fastener.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one example," "an example," and "some examples." Instances of the phrases "one example," "an example," or "some examples" do not necessarily refer to the same example. Particular features, structures 450, or characteristics may be combined in any suitable manner consistent with this disclosure.

As used herein, "comprising" is an open-ended term, and as used in the claims, this term does not foreclose additional structures 450 or steps.

As used herein, "configured to" means various parts or components may be described or claimed as "configured to" perform a task or tasks. In such contexts, "configured to" is used to connote structure 450 by indicating that the parts or components include structure 450 that performs those task or tasks during operation. As such, the parts or components can be said to be configured to perform the task even when the specified part or component is not currently operational (e.g., is not on).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

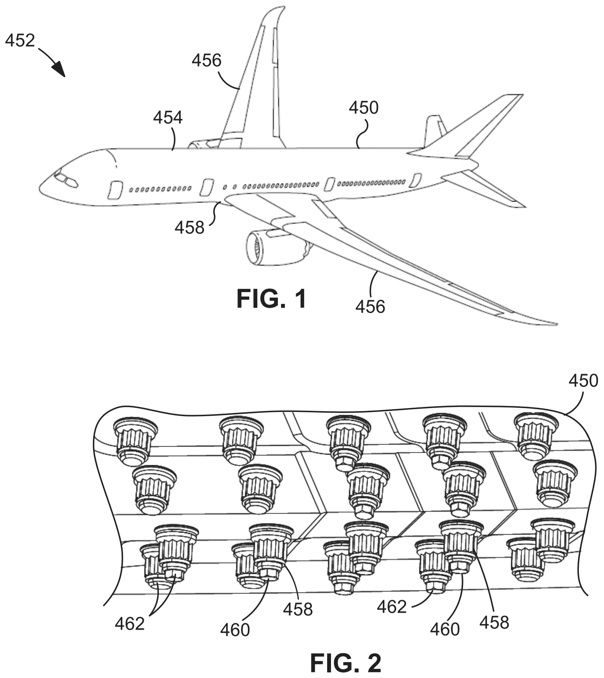

Referring now to the drawings which illustrate various examples of the disclosure, shown in Figure 1 is an example of an aircraft 452 which contains fasteners 458 that are torqued to specific torque levels during the aircraft assembly process. The aircraft 452 includes a fuselage 454, a pair of wings 456, and other structures 450 that contain torqued fasteners 458. The aircraft 452 is representative of one of many different types of structures 450 containing fasteners 458 that must be torqued to specific torque levels. Figure 2 shows a portion of the structure 450 of the aircraft 452 containing a plurality of fasteners 458. Each fastener includes a stud 462 and a nut 460, 470 installed on the stud 462, and washers (not shown) on each side of the fastener.

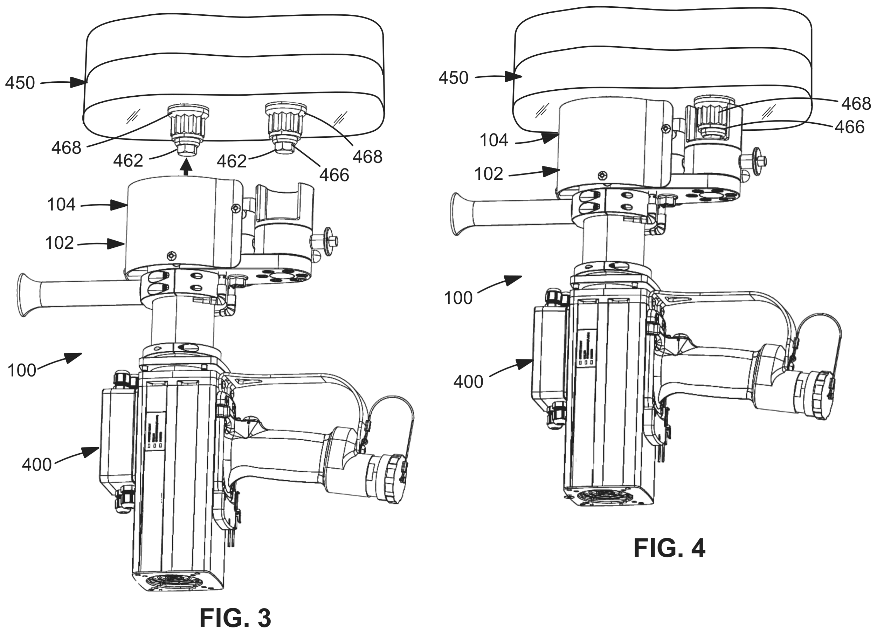

Referring to Figures 3-4, shown is an example of a torquing system 100 as presently disclosed and which is used for torquing fasteners 458 such as those illustrated in Figure 2. The torquing system 100 comprises a torque gun 400 and a torque mechanism 102 for torquing one fastener (e.g., a driven fastener 458) while an adjacent fastener (e.g., a reaction fastener 468) is used to react the torque generated when torquing the driven fastener 458. For each fastener, the nut is torqued on the stud 462 while simultaneously holding the stud 462 stationary, with access to both the nut and stud 462 limited to the same side of the structure 450. Figure 4 shows the torquing system 100 with the torque mechanism 102 engaged to the driven fastener 458 and the reaction fastener 468 (i.e., the reaction feature 466).

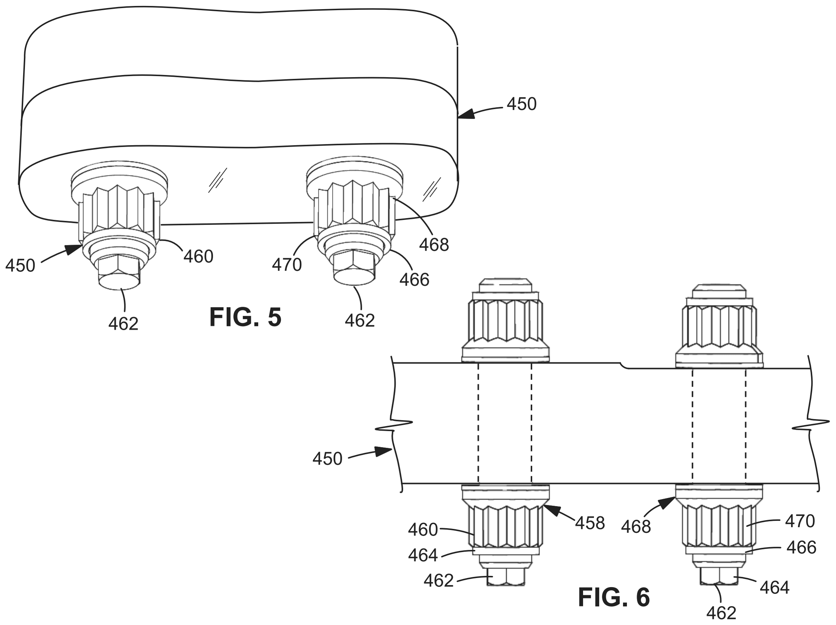

Referring to Figures 5-6, shown are magnified views of the driven fastener 458 and the reaction fastener 468 of Figures 3-4. Each fastener 458, 468 includes a stud 462 that extends through the structure 450, as shown in Figure 6. On one of the studs 462 is a reaction nut 470, and on the adjacent stud 462 is a driven nut 460. In the example shown, studs 462 are used instead of conventional bolts due to the limited space available on the opposite (e.g., upper) side of the structure 450 for installing bolts. In this example, the nut on the upper side of the structure 450 cannot be used for any reaction while tightening and torquing the driven nut 460 on the lower side of the structure 450 once the upper nut is installed and set to proper protrusion of the stud 462.

As shown in Figure 5, the lower end of each stud 462 has a holding feature 464 for preventing rotation of the stud 462 during torquing of the driven nut 460. The torque mechanism 102 is configured to engage the holding feature 464 of the stud 462 and prevent its rotation during torquing of the driven nut 460 as a requirement of the fastener installation process. In the example shown, the holding feature 464 is a hex-shaped cross section on the stud 462 end. However, the holding feature 464 can be provided in any one of a variety of configurations, as described below, and is not limited to a hex-shaped cross section on the stud 462 end.

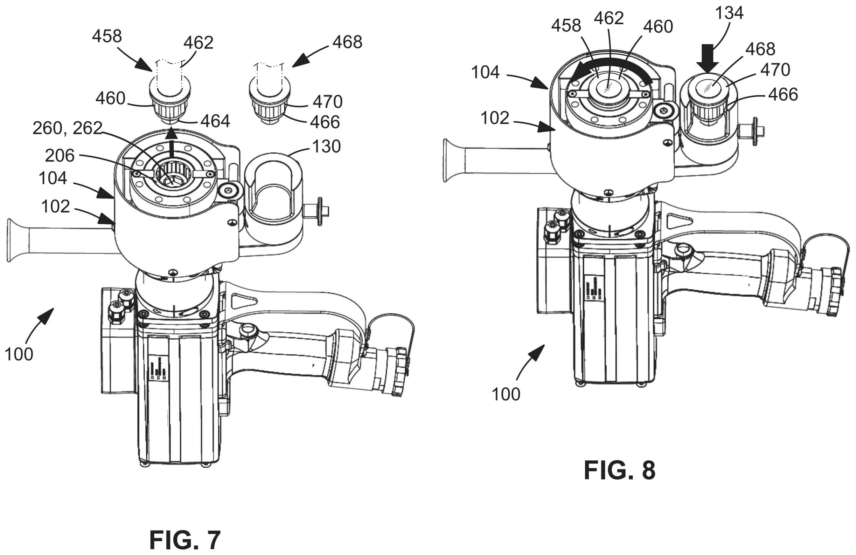

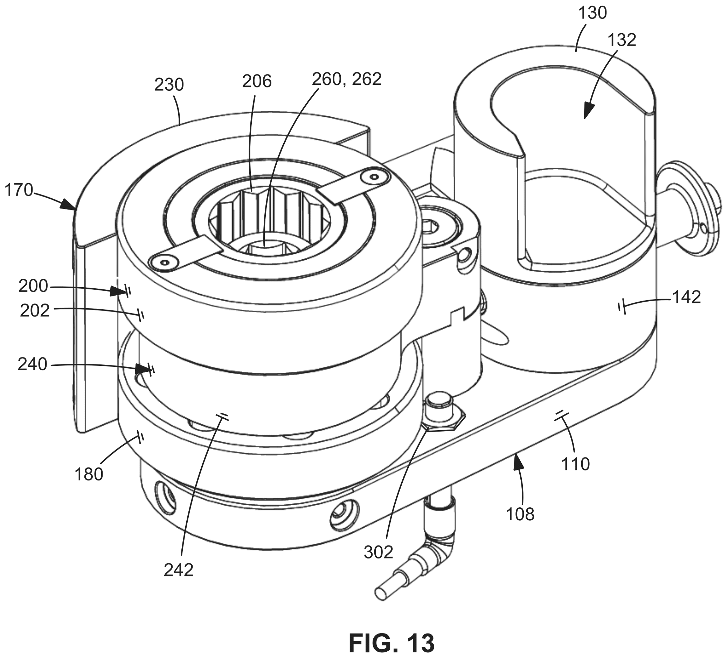

Referring to Figures 7-8, shown in Figure 7 is a perspective end view of the torquing system 100. As described in greater detail below, the torque mechanism 102 includes a nut socket 206 (Figures 7 and 12-13) configured to engage the driven nut 460 of the driven fastener 458. In addition, the torque mechanism 102 includes a stud engagement element 260 (e.g., a stud socket 262 - Figure 7) configured to engage the holding feature 464 on the end of the stud 462 of the driven fastener 458. In the example shown, the torque mechanism 102 also includes a reaction cup 130 configured to engage the reaction nut 470 of the reaction fastener 468 as shown in Figure 8, and transfer the reaction force 134 generated during torquing of the driven nut 460. The rotational direction of the torque mechanism 102 illustrated in Figure 8 corresponds to torquing the driven nut 460 on a stud 462 that has right-hand threads.

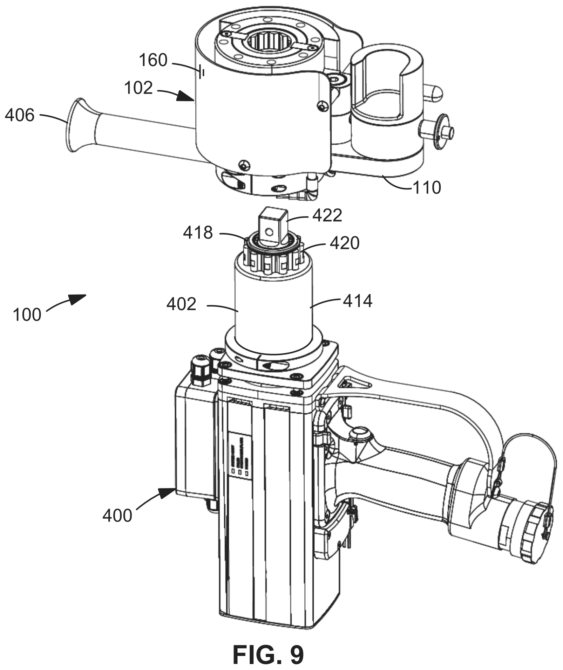

Referring to Figure 9, shown is the torquing system 100 with the torque mechanism 102 separated from the torque gun 400. In the example shown the torque gun 400, also referred to as a torque multiplier, is an electrically powered or electronic torque gun containing a planetary gearbox located in the cylindrical portion of the torque gun 400. The planetary gearbox magnifies the input torque of the torque gun servo motor (not shown) while reducing the speed of rotation. Although the presently disclosed torque mechanism 102 is described in the context of an electrically powered torque gun, the torque gun 400 can be provided in any one of a variety of different configurations. For example, the torque gun 400 can be a manually-powered torque gun, a pneumatically-powered torque gun (i.e., an air ratchet), or other types of torque guns.

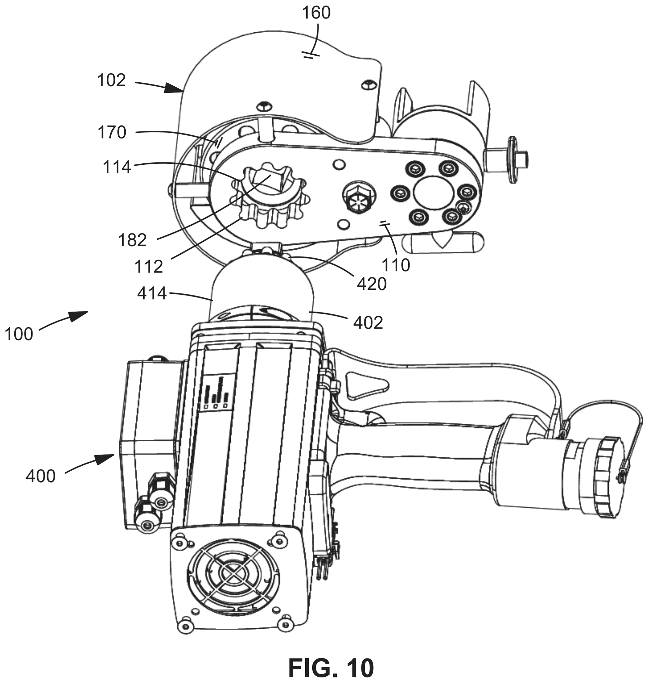

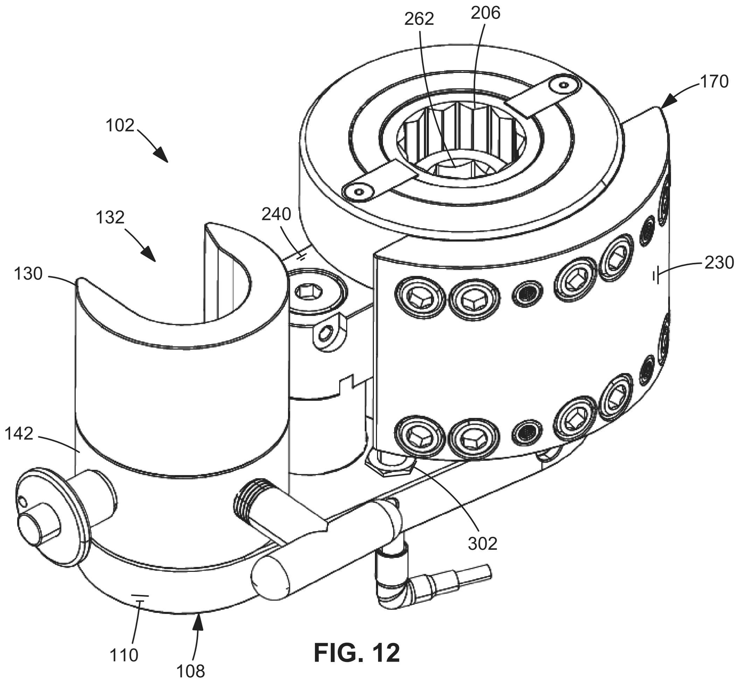

Referring to Figures 9-11, the torque gun 400 has a torque gun drive shaft 422 (e.g., a square drive) located at the end of the torque gun body 402. The torque gun drive shaft 422 is inserted in a drive socket 182 (Figure 10) of a rotatable disc assembly 170 (Figure 12) of the torque mechanism 102. When the torque gun servo motor is activated, the torque gun drive shaft 422 rotates the disc assembly 170, which transfers rotational motion to the driven nut 460 of the driven fastener 458 as described in greater detail below.

In addition to the torque gun drive shaft 422 (Figure 9), the torque gun 400 has a non-rotatable torque gun engagement element 418 from which the torque gun drive shaft 422 protrudes. In the example shown, the torque gun engagement element 418 is configured as an external male spline 420 having circumferentially arranged lobes. However, in other examples not shown, the torque gun engagement element 418 may be provided in any one of a variety of alternative shapes, and is not limited to a male spline 420. Regardless of its shape, the torque gun engagement element 418 is integral with the torque gun housing 414. An auxiliary handle 406 (Figure 9) can optionally be mounted on the torque gun housing 414 to facilitate handling of the torque gun 400 during the process of torquing (or loosening) fasteners 458.

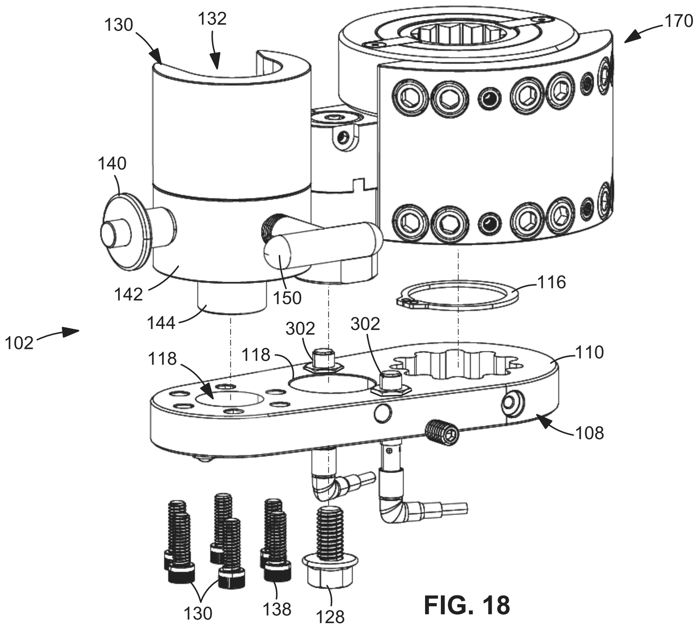

The torque mechanism 102 includes a reaction arm 110 configured to be mounted on the torque gun engagement element 418. The reaction arm 110 transmits to the reaction fastener 468 the reaction force 134 (Figure 8) that is generated when torquing a driven nut 460 via the torque mechanism 102. As shown in Figures 10-11, the reaction arm 110 has an opening on one end containing a reaction arm engagement element 112 in the form of an internal female spline 114. The female spline 114 has circumferentially arranged lobes that are complementary to the male spline 420 of the torque gun engagement element 418. When the female spline 114 of the reaction arm 110 is mounted on the male spline 420 of the torque gun 400, a reaction arm retaining ring 116 (e.g., a snap ring - Figure 18) secures the reaction arm 110 to the torque gun 400.

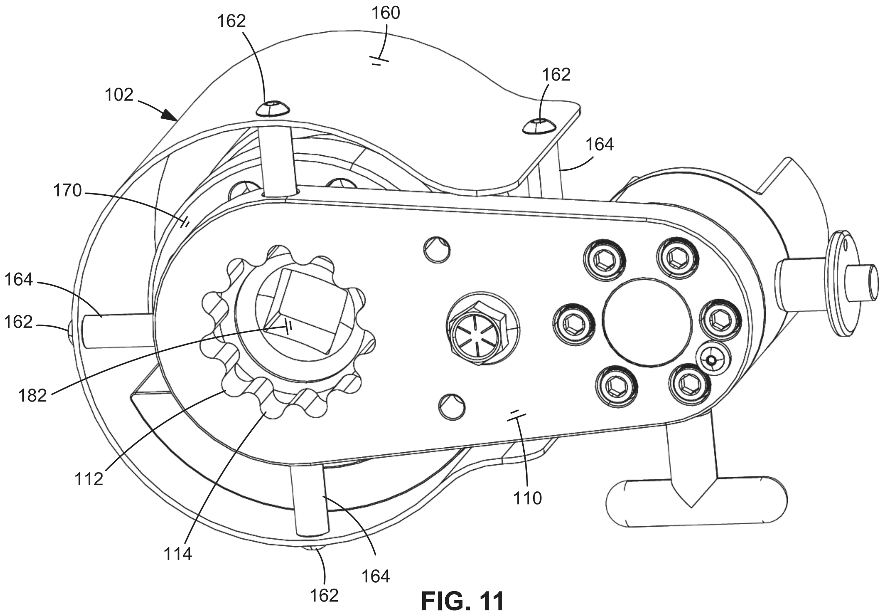

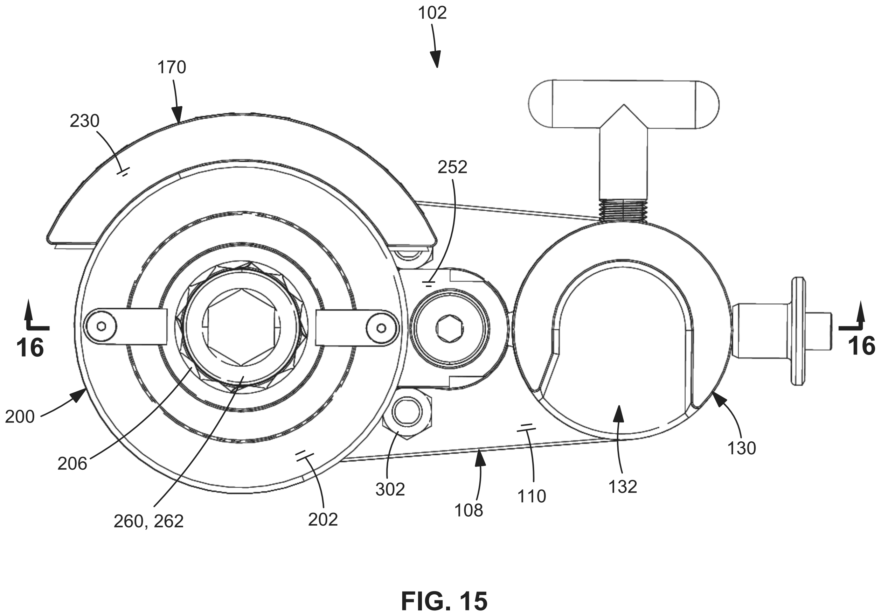

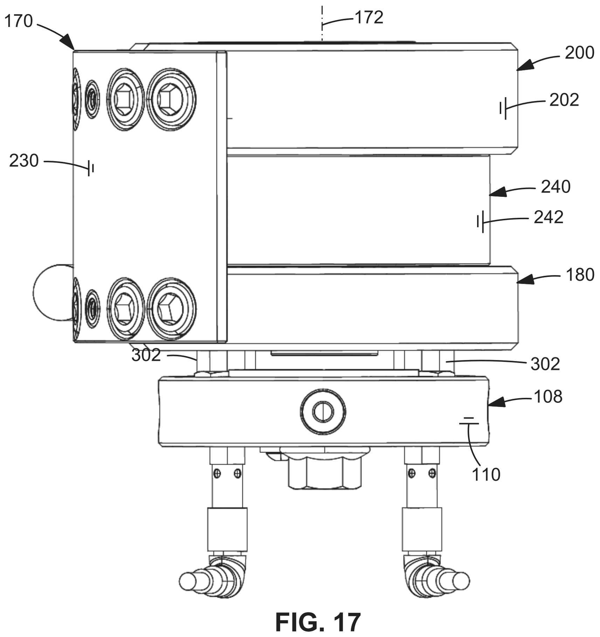

Referring to Figures 12-17, shown is the torque mechanism 102, which includes the reaction arm 110, the rotatable disc assembly 170, and a static disc subassembly 240. In the example shown, a safety cover 160 (Figure 11) has been removed from the torque mechanism 102 to illustrate the rotatable disc assembly 170 and the static disc subassembly 240. As shown in Figure 11, the safety cover 160 is coupled to various components of the torque mechanism 102 via multiple mounting screws 162, each of which extends through a tubular standoff 164.

In Figures 12-17, the reaction arm 110 is part of a reaction arm assembly 108 which, in the example shown, includes a reaction cup 130 mounted on a cup support fitting 142, which is attached to the reaction arm 110. The reaction cup 130 has a cup opening 132 configured to receive a reaction feature 466 (e.g., the reaction fastener 468 - Figures 3-8) during the initial stage of torquing a driven fastener 458 using the torque mechanism 102. As described in greater detail below, the reaction arm 110 rotates into the reaction fastener 468 once the nut socket 206 and stud socket 262 are engaged to the driven fastener 458.

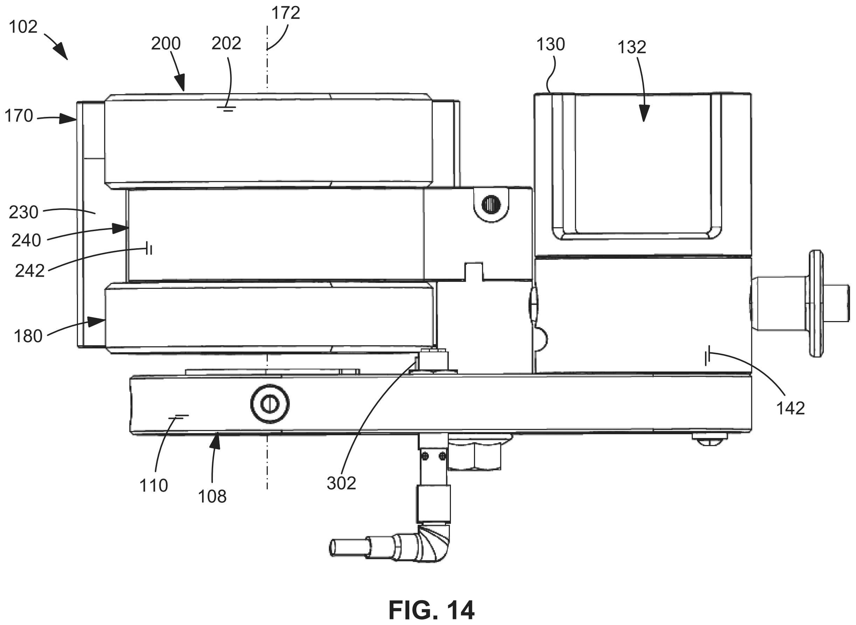

The rotatable disc assembly 170 comprises the drive disc 180, a driven disc subassembly 200, and an arc plate 230. The driven disc subassembly 200 is coaxially aligned with the drive disc 180. The arc plate 230 interconnects the drive disc 180 and the driven disc subassembly 200. The arc plate 230 transfers rotational motion of the torque gun drive shaft 422 (Figure 9) from the drive disc 180 to the driven disc subassembly 200. In this regard, the drive disc 180 and the driven disc subassembly 200 rotate in unison with the torque gun drive shaft 422 about a central axis 172 (Figure 14) of the torque mechanism 102, as described in greater detail below.

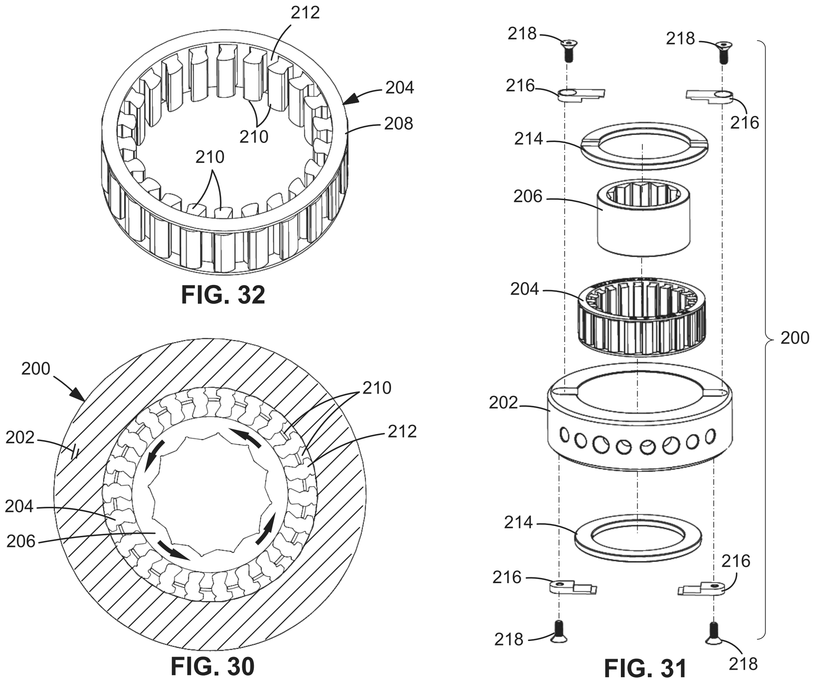

The drive disc 180 contains a drive socket 182, which receives the torque gun drive shaft 422 as shown in Figures 9-11. The driven disc subassembly 200 includes a driven disc body 202, which contains a unidirectional nut clutch 204 as shown in Figures 30-32. The nut clutch 204 contains a nut socket 206 configured to engage the driven nut 460 of the driven fastener 458. As described in greater detail below, the nut clutch 204 is oriented in a manner limiting rotation of the nut socket 206 to a single direction relative to the disc assembly 170 upon engagement of the reaction arm 110 to an external reaction feature 466, such as the reaction fastener 468 of Figures 3-8.

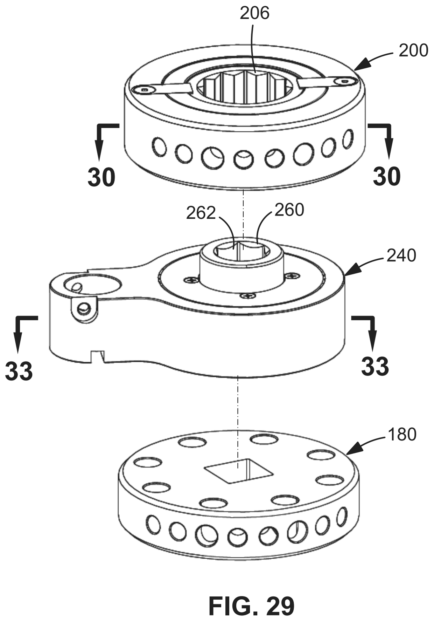

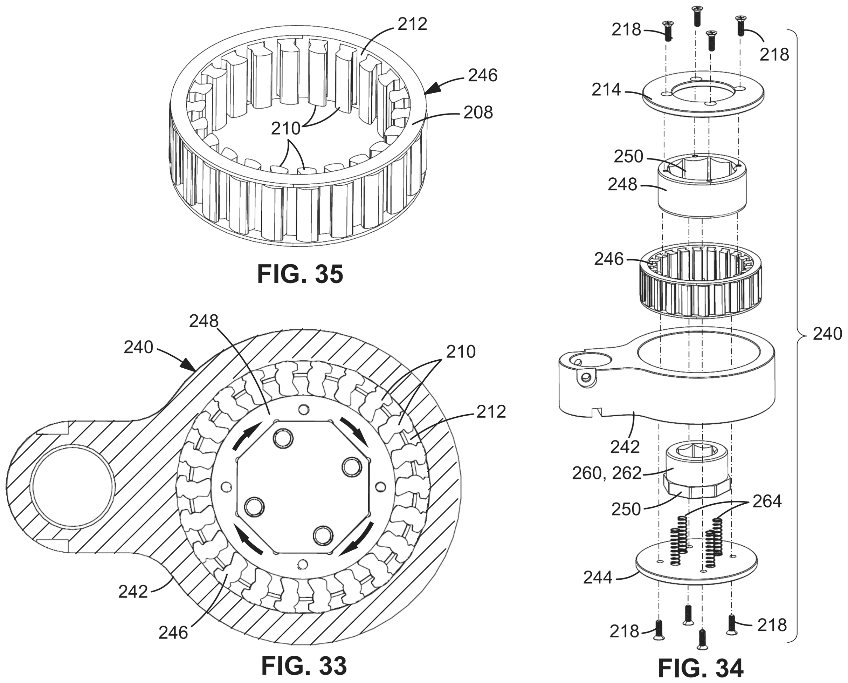

The static disc subassembly 240 (Figure 29) is coaxially aligned with, and located between, the driven disc subassembly 200 and the drive disc 180. The static disc subassembly 240 is non-rotatably coupled to the reaction arm 110. In addition, the static disc subassembly 240 (Figure 33) includes a static disc body 242, which contains a unidirectional stud clutch 246 surrounding a stud engagement element 260. As shown in Figures 33-35 and described below, the stud clutch 246 is oriented in a manner preventing rotation of the stud engagement element 260 in the same direction as the nut socket 206. In the example shown, the stud engagement element 260 is a stud socket 262 configured to engage the hex-shaped holding feature 464 (Figure 5) on the stud 462 end of the driven fastener 458.

Referring to Figures 18-20, shown is the torque mechanism 102 with the disc assembly 170 and the reaction cup 130 separated away from the reaction arm 110. The reaction cup 130 is part of the reaction arm assembly 108. In the example shown, the reaction cup 130 has a cup opening 132 configured to receive the reaction feature 466 (e.g., a reaction fastener 468). Once the torque mechanism 102 is engaged to the driven fastener 458 (Figure 8) and the torque gun drive shaft 422 (Figure 9) starts rotating, the reaction arm 110 rotates into the reaction fastener 468. Once the reaction cup 130 is fully engaged to the reaction fastener 468, further rotation of the torque gun drive shaft 422 results in torquing of the driven nut 460.

Although the illustrated example of the reaction cup 130 has a cup opening 132, other examples of the torque mechanism 102 may omit the cup opening 132 from the reaction cup 130. For examples in which the reaction cup 130 lacks a cup opening 132, installation of the torque mechanism 102 on the driven fastener 458 and reaction fastener 468 requires that the nut socket 206 and stud socket 262 are oriented in a manner allowing for axial movement of the reaction cup 130 onto the reaction fastener 468 as the nut socket 206 and stud socket 262s are engaged to the driven fastener 458. In still other examples of the torque mechanism 102 not shown, the reaction cup 130 can be altogether omitted, and the reaction arm 110 itself can be configured to bear against a reaction feature 466 (e.g., a reaction fastener 468) during torquing of a driven fastener 458.

In the example of Figures 18-20, the reaction cup 130 is removably coupled to the reaction arm 110. For example, the reaction cup 130 is removably mounted on a cup support fitting 142 having a cylindrical support fitting boss 144 protruding from a bottom end of the cup support fitting 142. The support fitting boss 144 is configured to be inserted in a cylindrical bore 118 formed in the reaction arm 110. The cup support fitting 142 is mechanically fastened to the reaction arm 110 via a plurality of reaction cup fasteners 138 that extend upwardly through the reaction arm 110 and into the cup support fitting 142.

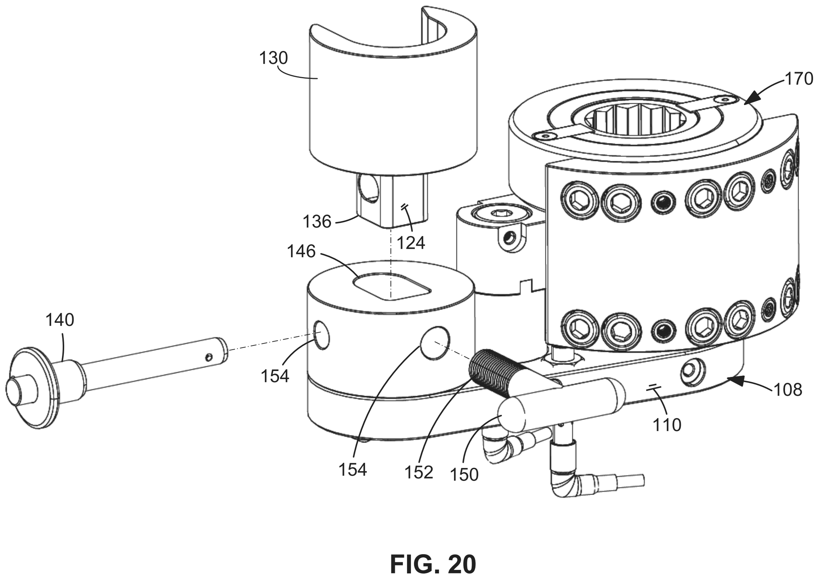

As shown in Figure 20, the reaction cup 130 includes a reaction cup base portion 136 configured to be inserted in the top portion of the cup support fitting 142. Removable of the reaction cup 130 is facilitated by a quick-release pin 140 (e.g., a ball-lock pin) that is inserted into a lateral hole 154 (Figure 20) extending through the cup support fitting 142 and into the reaction cup base portion 136 (Figure 20). The quick-release pin 140 allows for quick mounting and removal of the reaction cup 130, which allows for easy replacement of the reaction cup 130 with one of a different size (e.g., cup inner diameter) to accommodate different sizes of reaction fasteners 468 (e.g., stud diameters of 0.75 in., 0.875 in., 1.00 in., etc.). Further in this regard, the torque mechanism 102 is configured to allow for quick replacement of the reaction arm 110 with another reaction arm 110 providing a different distance between the reaction cup 130 and the central axis 172 of the torque mechanism 102, to accommodate different center-to-center fastener spacings between the driven fastener 458 and the reaction fastener 468.

Referring to Figures 18-20, some examples of the torque mechanism 102 optionally include a torque windup release mechanism 150 configured to release windup pressure generated within the torque mechanism 102 during torquing of the driven fastener 458. As the torque gun 400 applies torque to the driven fastener 458, the components of the torque mechanism 102 may become bound up or slightly twisted, causing the torque mechanism 102 to become stuck on the driven fasteners 458 and unable to be removed after the final preprogrammed torque level is achieved at the driven fastener 458. The windup torque is generated during torquing of the driven fastener 458 due to the force between the driven nut 460 and the nut socket 206 (i.e., the driven nut 460 is pushing in a direction opposite the direction that the nut socket 206 is trying to turn), and a similar force in the opposite direction between the stud 462 and the stud engagement element 260 (e.g., stud socket 262). These counteracting forces create a reaction couple which binds the torque mechanism 102 onto the driven nut 460 and the stud 462. In such cases, release of the windup pressure is necessary to allow for removal of the torque mechanism 102 from the driven fastener 458.

Referring to Figure 20, in the example shown, the torque windup release mechanism 150 is integrated into the cup support fitting 142 of the reaction arm assembly 108. The torque windup release mechanism 150 comprises a threaded shaft 152 (e.g., a T-handle bolt) installed in a threaded hole 154 extending laterally into a side of the cup support fitting 142. As shown in Figure 20, the top portion of the cup support fitting 142 includes a support fitting slot 146. The reaction cup base portion 136 is sized and configured to be received in the support fitting slot 146. However, the length of the reaction cup base portion 136 is shorter than the length of the support fitting slot 146, resulting in a gap (not shown) between one end of the reaction cup base portion 136 and one end of the support fitting slot 146. The reaction cup base portion 136 and the support fitting slot 146 may each include a flat 124 against which the end of the threaded shaft 152 bears.

In Figure 20, the threaded shaft 152 is rotated (i.e.. screwed into the threaded hole 154) to clamp the reaction cup base portion 136 against the end of the support fitting slot 146 opposite the threaded shaft 152. If the torque mechanism 102 is stuck on the driven fastener 458 at the completion of the torquing process due to windup pressure, the threaded shaft 152 can be rotated in a reverse direction (i.e., unscrewed) from the cup support fitting 142, which allows the reaction cup base portion 136 to slide into the gap in the support fitting slot 146. Such sliding movement of the reaction cup base portion 136 within the support fitting slot 146 allows the reaction arm 110 and disc assembly 170 to rotate slightly relative to the static disc subassembly 240, which releases the windup pressure in the torque mechanism 102 and allows for its removal from the driven fastener 458.

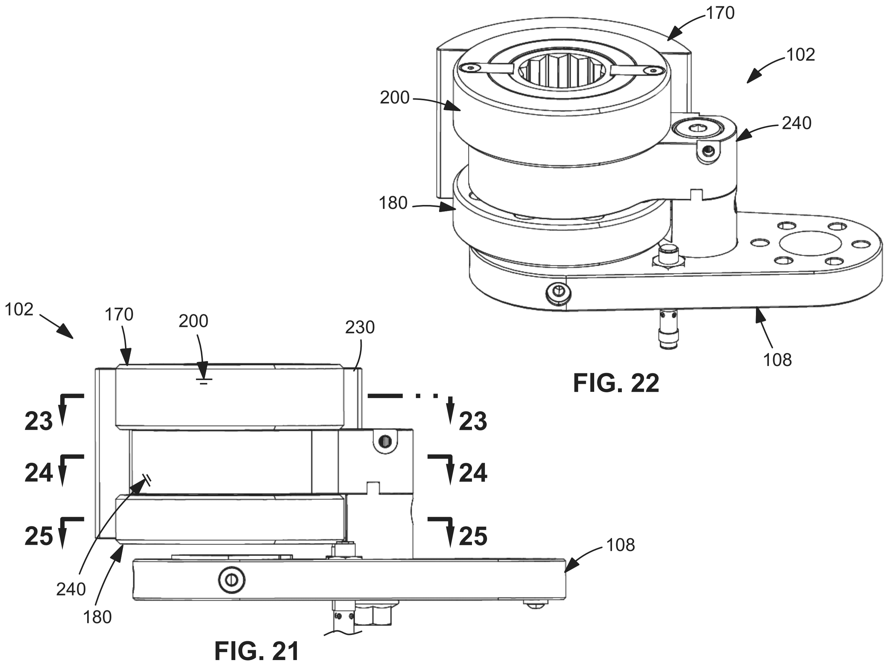

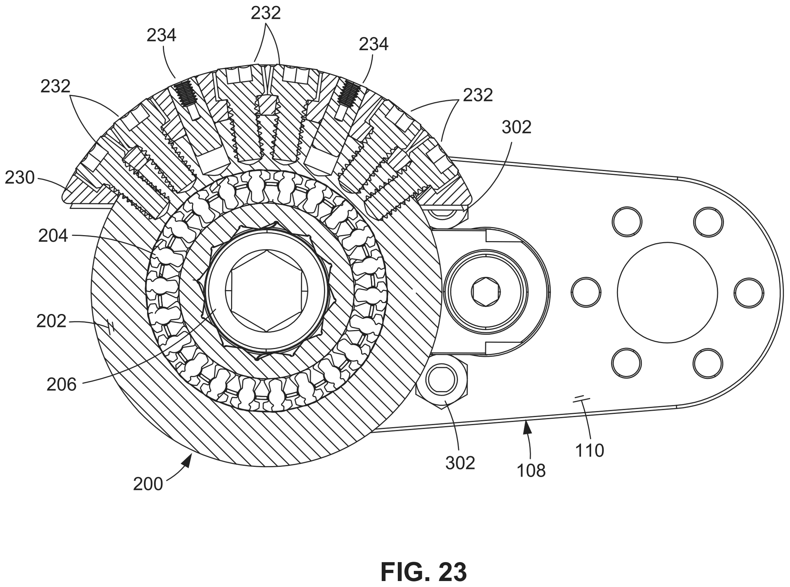

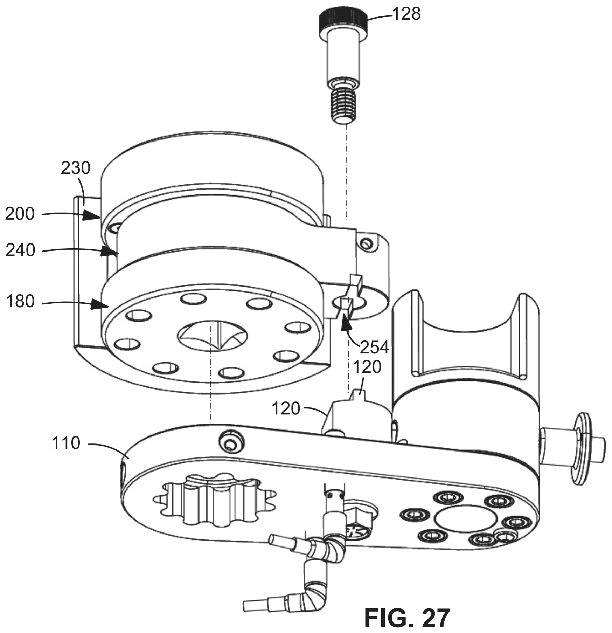

Referring to Figures 21-33, shown in Figures 21-22 is the torque mechanism 102 with the reaction cup 130 and cup support fitting 142 removed for clarity to illustrate the rotatable disc assembly 170 and the static disc subassembly 240. As mentioned above, the rotatable disc assembly 170 comprises a drive disc 180, a driven disc subassembly 200, and an arc plate 230. The arc plate 230 interconnects the drive disc 180 and the driven disc subassembly 200 via a plurality of radially oriented arc plate fasteners 232 and dowel pins 234, as shown in Figures 23, 25 and 28.

Figure 23 is a section view of the driven disc subassembly 200 showing the radially oriented arc plate fasteners 232 and dowel pins 234 coupling the arc plate 230 to the driven disc body 202. The driven disc subassembly 200 includes the above-mentioned unidirectional nut clutch 204, which is surrounded by the driven disc body 202. The nut clutch 204 contains the nut socket 206 which is configured to engage the driven nut 460. In the example shown, the nut socket 206 is a 12-point socket for engaging a 12-point driven nut 460. However, in other examples not shown, the nut socket 206 can be provided in any one of a variety of alternative shapes (e.g., 6-point socket, etc.) configured to engaged a similarly-shaped driven nut 460.

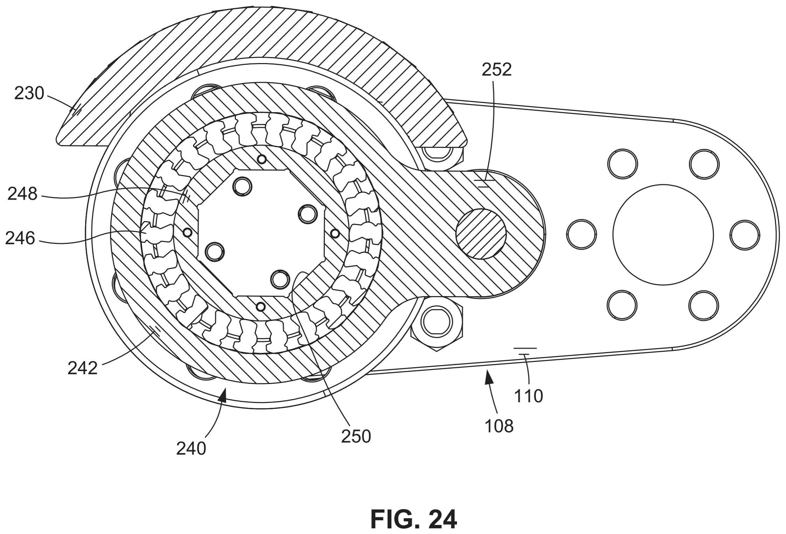

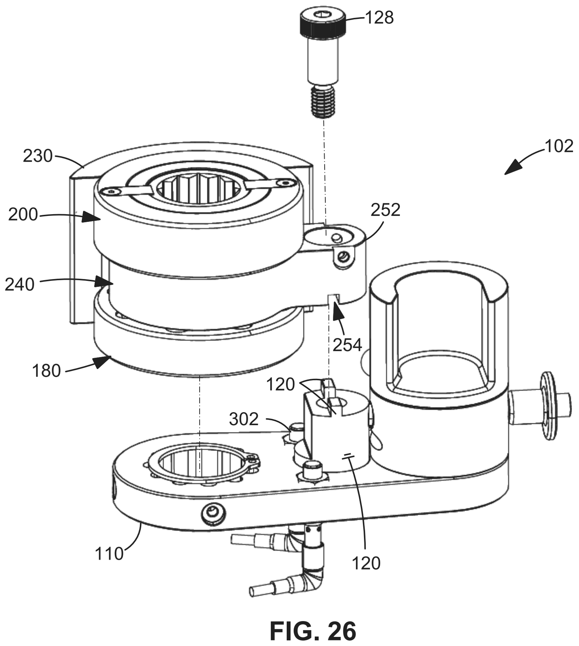

Figure 24 is a section view of the static disc subassembly 240, which is located between the drive disc 180 and the driven disc subassembly 200. The static disc subassembly 240 includes a static disc body 242 which surrounds the unidirectional stud clutch 246. The static disc body 242 couples the static disc subassembly 240 to the reaction arm 110. For example, the static disc body 242 includes a static disc arm 252 that is mechanically fastened to a pedestal 120 protruding from the reaction arm 110, as shown in Figures 26-27 and described below.

The stud clutch 246 surrounds and is in contact with a stud clutch inner race 248. The stud engagement element 260 (e.g., the stud socket 262 - Figures 29 and 34) is axially slidable with the stud clutch inner race 248 to facilitate the engagement of the stud engagement element 260 to the end of the stud 462, as described in greater detail below. The interior of the stud clutch inner race 248 has an anti-rotation feature 250 (e.g., a polygonal cross sectional shape) configured complementary to the cross-sectional shape on the lower part of the stud engagement element 260 (e.g., the stud socket 262 - Figure 34). The anti-rotation feature 250 allows the stud engagement element 260 to axially slide within the stud clutch inner race 248, while preventing rotation of the stud engagement element 260 relative to the stud clutch inner race 248. Axial motion of the stud engagement element 260 within the stud clutch inner race 248 is facilitated by multiple stud engagement springs 264 installed under the stud engagement element 260 as shown in Figure 34 and described below.

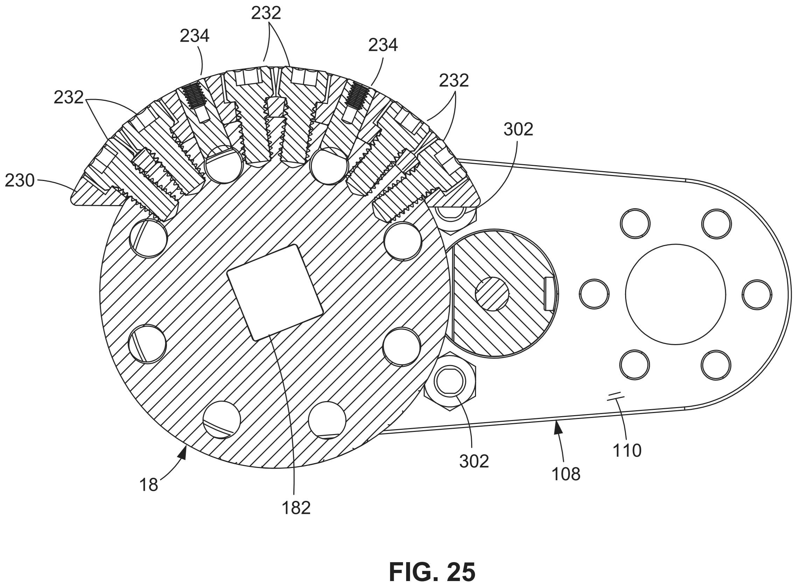

Figure 25 is a section view of the drive disc 180 showing the radially oriented arc plate fasteners 232 and dowel pins 234 coupling the arc plate 230 to the drive disc 180. Also shown is the drive socket 182, which is configured to receive the torque gun drive shaft 422 (Figure 9), as mentioned above.

Referring to Figures 26-27, shown is the torque mechanism 102 with the driven disc subassembly 200, the static disc subassembly 240, the drive disc 180, and the arc plate 230 separated away from the reaction arm 110. As mentioned above, the static disc subassembly 240 is coupled to the reaction arm 110 via the static disc arm 252, which is mechanically fastened to the pedestal 120.

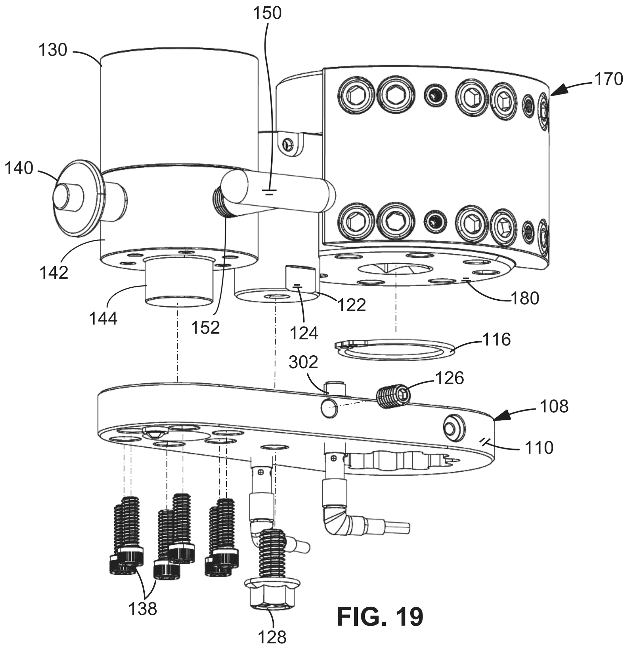

Referring briefly to Figure 19, the pedestal 120 has a cylindrical pedestal base 122 configured to fit within a circular bore 118 (Figure 18) formed in the reaction arm 110. The pedestal 120 is secured to the reaction arm 110 via a pedestal bolt 128 that extends upwardly through the reaction arm 110 and into the pedestal base 122. A set screw 126 extends laterally through the reaction arm 110, and bears against a flat 124 formed on one side of the pedestal base 122. The set screw 126 prevents rotation of the pedestal 120.

Referring back to Figures 26-27, the static disc subassembly 240 is secured to the pedestal 120 via a pedestal bolt 128 which passes downwardly through the static disc arm 252 and extends into the pedestal 120. The underside of the static disc arm 252 has a pair of arm slots 254 on opposite sides of the bolt hole for the pedestal bolt 128 on the upper side of the static disc arm 252. When the static disc arm 252 is mounted on the pedestal 120, the arm slots 254 receive a corresponding pair of pedestal bosses 127 formed on the top of the pedestal 120. The interlocking of the arm slots 254 with the pedestal bosses 127 prevents rotation of the static disc subassembly 240 relative to the pedestal 120.

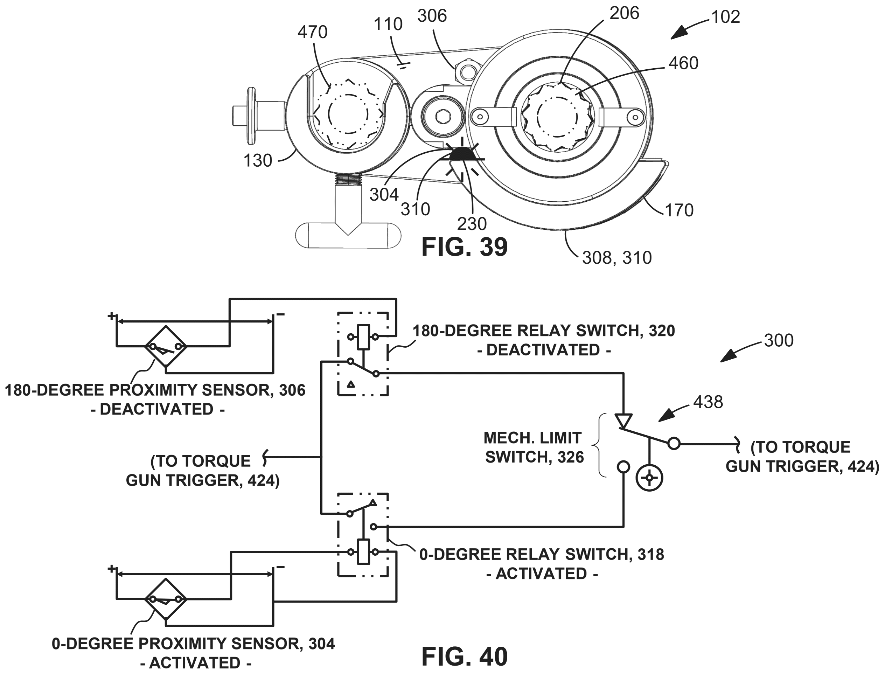

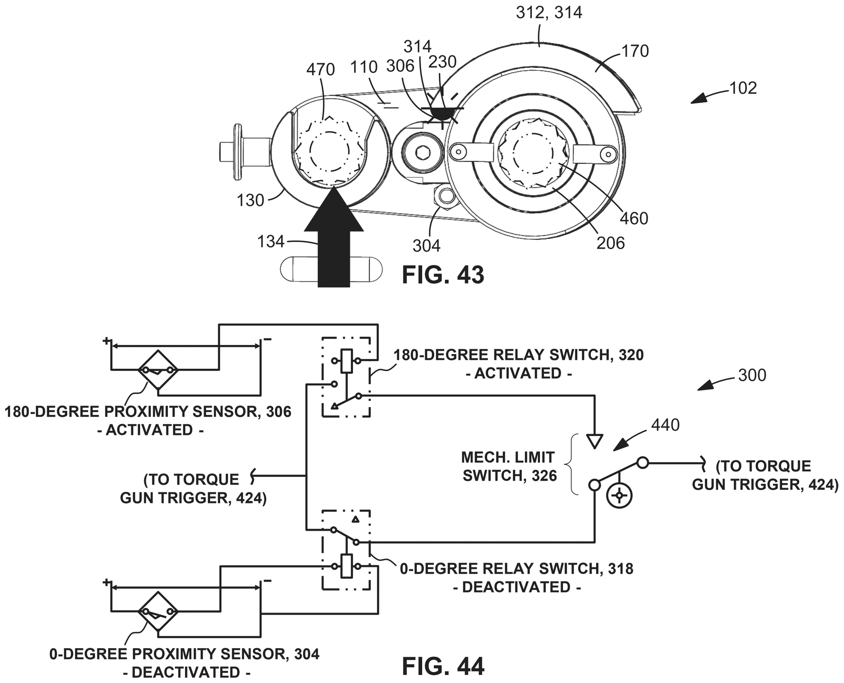

Referring to Figures 23-27, the reaction arm 110 includes a pair of proximity sensors 302 for sensing the position of the disc assembly 170 as it rotates 180 degrees between a start position 308 (e.g., Figure 39) and an end position 312 (e.g., Figure 43). The proximity sensors 302 are part of a rotation control circuit 300 (Figure 40), which is integrated into the torque mechanism 102 and the torque gun 400. As described in greater detail below, the proximity sensors 302 generate proximity signals that are sent to the torque gun 400 to automatically stop rotation of the disc assembly 170 to avoid colliding with other components (e.g., the static disc body 242, the pedestal 120, etc.) of the torque mechanism 102, which would result in a false torque level being logged with the electronic torque gun 400.

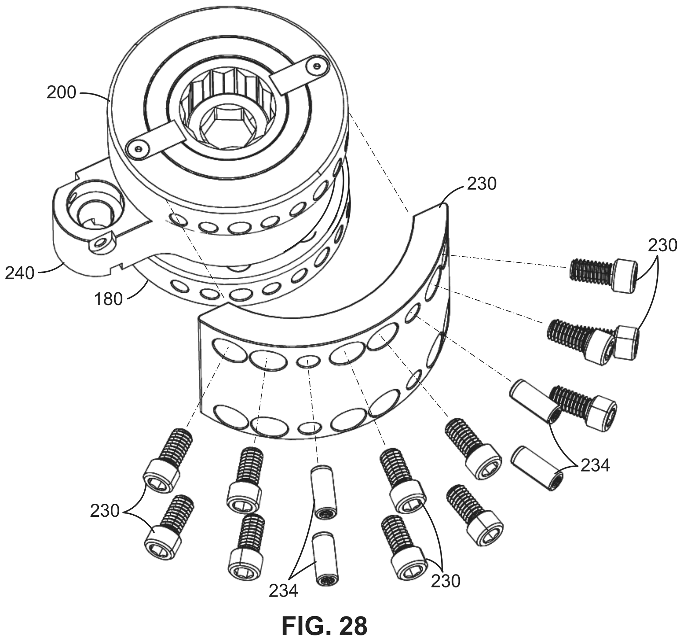

Referring to Figure 28, shown is the arc plate 230 separated away from the drive disc 180, the static disc subassembly 240, and the driven disc subassembly 200. As mentioned above, the arc plate 230 interconnects the drive disc 180 and the driven disc subassembly 200 so that they rotate in unison with the torque gun drive shaft 422. In this regard, the arc plate 230 transfers rotation of the drive disc 180 to the driven disc body 202 (Figure 30). The arc plate 230 is fastened to the driven disc body 202 and the drive disc 180 via the plurality of arc plate fasteners 232, which, in the example shown, are Allen screws. Dowel pins 234 extending radially from the arc plate 230 into the drive disc 180 and the driven disc body 202 transfer shear load between the arc plate 230 and the drive disc 180 and between the arc plate 230 and the driven disc body 202.

In the presently disclosed example of the torque mechanism 102, the drive disc 180 (Figure 29) and the driven disc body 202 (Figure 30) have cylindrical outer perimeters, and the arc plate 230 is shaped complementary to the cylindrical shape of the drive disc 180 and the driven disc body 202. However, in other examples not shown, the drive disc 180 and the driven disc body 202 can have perimeter shapes that are non-cylindrical (e.g., hexagonal, octagonal, etc.), in which case the arc plate 230 can be configured complementary to the outer perimeter shape of the drive disc 180 and driven disc body 202.

Referring to Figure 29, shown is an exploded view of the driven disc subassembly 200, the static disc subassembly 240, and the drive disc 180, which are coaxially aligned with each other. The driven disc subassembly 200 contains the unidirectional nut clutch 204 (Figures 30-32), which limits rotation of the nut socket 206 to a single direction. The static disc subassembly 240 contains the unidirectional stud clutch 246 (Figures 33-35), which prevents rotation of the stud engagement element 260 in the same direction as the nut socket 206 when the reaction arm 110 is engaged to a reaction feature 466 (e.g., reaction fastener 468).

In Figure 29, the stud engagement element 260 (e.g., stud socket 262) is shown protruding out of the top of the static disc subassembly 240. The protrusion of the stud engagement element 260 is a result of above-mentioned stud engagement springs 264 (Figure 34), which the stud engagement element 260 rests upon within the static disc subassembly 240, as shown in Figure 34. The stud engagement springs 264 axially bias the stud engagement element 260 (e.g., the stud socket 262) toward the stud 462 of the driven fastener 458 as the nut socket 206 is engaged to the driven nut 460. The stud engagement springs 264 allow for axial motion of the stud engagement element 260 within the nut socket 206, and thereby accommodate differences in the amount by which the stud 462 protrudes from the nut socket 206 at different fastener locations. Although the stud engagement element 260 is axially movable within the nut socket 206, the stud engagement element 260 and nut socket 206 are not connected to each other. Furthermore, the nut socket 206 rotates independent of the stud engagement element 260, which is held stationary by the stud clutch 246 during operation of the torque mechanism 102.

Referring to Figures 30-31, shown is the driven disc subassembly 200, which includes a driven disc body 202 surrounding the unidirectional nut clutch 204, which surrounds the nut socket 206. The nut clutch 204 limits rotation of the nut socket 206 to a single direction relative to the disc assembly 170 (Figure 22), and allows the disc assembly 170 to rotate freely in the opposite direction during reverse rotation of the torque gun drive shaft 422 without rotating the nut socket 206 and without removing the nut socket 206 from the driven nut 460.

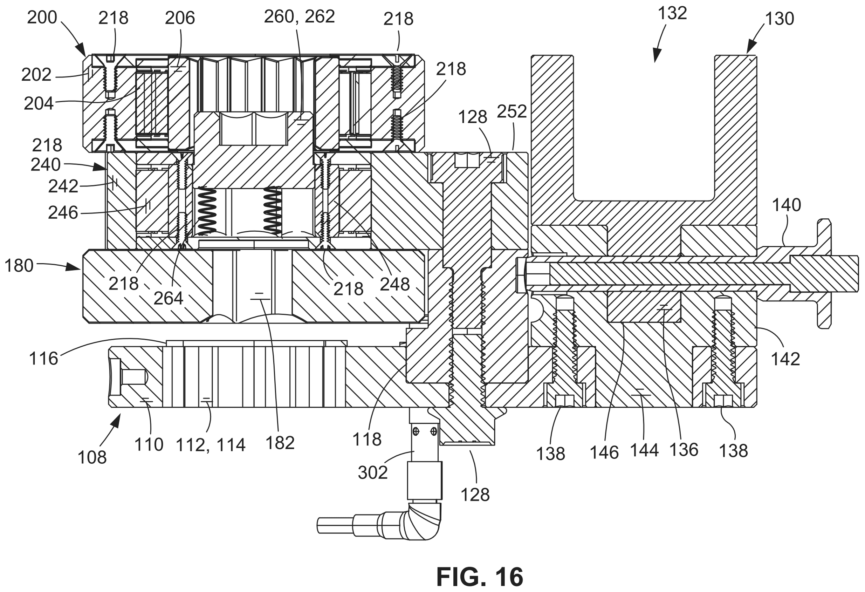

As shown in Figures 16 and 31, the nut socket 206 and the nut clutch 204 are secured within the driven disc body 202 by clutch retaining rings 214 located respectively on the top side and bottom side of the driven disc subassembly 200. The clutch retaining rings 214 are secured in position by clutch retaining tabs 216 that extend radially over the top side and bottom side of the driven disc subassembly 200. The clutch retaining tabs 216 are fastened to the driven disc body 202 via retaining screws 218.

Referring to Figure 32, shown is an example of the unidirectional nut clutch 204. The nut clutch 204 is configured to drive the nut socket 206 in one direction, and free wheel around the nut socket 206 in the opposite direction. The nut clutch 204 comprises a circular array of sprag elements 210 mounted within a clutch frame 208. Each sprag element 210 has an asymmetric figure eight cross sectional shape when viewed from a top-down direction as shown in Figures 30 and 32. The sprag elements 210 are interconnected by a clutch spring 212 extending circumferentially over or through each of the sprag elements 210. The clutch spring 212 is configured to maintain the sprag elements 210 in constant contact with the inner surface of the driven disc body 202 and the outer surface of the nut socket 206. When the driven disc body 202 is rotated in one direction, the sprag elements 210 pivot slightly, producing a wedging action that frictionally binds the sprag elements 210 to the driven disc body 202 and the nut socket 206, causing the nut socket 206 to rotate. When the driven disc body 202 is rotated in the opposite direction, the sprag elements 210 slip freely over the surfaces of the driven disc body 202 and nut socket 206, thereby preventing rotation of the nut socket 206.

Referring to Figures 33-35, shown is the static disc subassembly 240, which includes the static disc body 242 surrounding the unidirectional stud clutch 246. As described above, the stud clutch 246 surrounds the stud clutch inner race 248. Within the stud clutch inner race 248 is the stud engagement element 260, which is axially slidable with the stud clutch inner race 248. In the example shown, the stud engagement element 260 is a stud socket 262 (e.g., a 6-point socket) configured to engage a similarly-shaped holding feature 464 on the stud end, such as the hex-shaped cross section shown in Figure 5. However, the holding feature 464 can be provided in any one of a variety of alternative external shapes not shown, such as an opposing pair of flat surfaces, a square cross-sectional shape, or other cross-sectional shapes, and the stud engagement element 260 can be configured complementary to the external shape of the holding feature 464. As an alternative to external shapes or features, the holding feature 464 can optionally be configured as an internal shape or feature such as a hex recess, a square recess, a Torx^{™} recess, or a variety of other recess shapes formed in the end of the stud 462, and the stud engagement element 260 can be configured to be inserted into such internal features of the stud 462.

As shown in Figures 16 and 34, the lower portion of the stud engagement element 260 includes the above-mentioned anti-rotation feature 250 which, in the example shown, has a polygonal cross sectional shape. A similarly shaped anti-rotation feature 250 is formed in the interior of the stud clutch inner race 248. The anti-rotation feature 250 allows the stud engagement element 260 to axially slide within the stud clutch inner race 248 while preventing rotation of the stud engagement element 260 relative to the stud clutch inner race 248. In the example shown, the anti-rotation feature 250 of the stud clutch inner race 248 has an octagonal cross-sectional shape to match a similar cross-sectional shape of the lower portion of the stud engagement element 260. The octagonal cross-sectional shape on the stud engagement element 260 (e.g., stud socket 262) accommodates the square pattern of the stud engagement springs 264. However the anti-rotation feature 250 may be provided in any one of a variety of alternative shapes (e.g., hexagonal, etc.) that accommodate a different hole pattern of the stud engagement springs 264, and is not limited to an octagonal shape.

Referring still to Figures 16 and 34, the static disc subassembly 240 includes a static disc end plate 244 that nests within the bottom end of the static disc body 242, and a clutch retaining ring 214 that nests within the top end of the static disc body 242 for retaining the stud clutch inner race 248 and stud clutch 246 within the static disc body 242. The nesting of the static disc end plate 244 and clutch retaining ring 214 within the static disc body 242 keeps the stud clutch inner race 248 centered within the stud clutch 246. The static disc end plate 244 is secured to the bottom side of the stud clutch inner race 248 via a plurality of retaining screws 218. The clutch retaining ring 214 is secured to the top side of the stud clutch inner race 248 via a plurality of retaining screws 218.

As mentioned above, the stud engagement element 260 (e.g., stud socket 262) is axially biased toward the open upper end of the nut socket 206 (i.e. toward the stud 462) to accommodate differences in the amount by which the stud 462 protrudes from the driven nut 460 at different fastener locations. Such differences in protrusion may be the result of differences in shimming the fasteners at different fastener locations. In the example shown, axial biasing of the stud engagement element 260 is achieved with the stud engagement springs 264 (e.g., coil springs) located between the stud engagement element 260 and the static disc end plate 244. Each stud engagement spring is received within a bore (not shown) formed in the bottom side of the stud engagement element 260. Advantageously, the stud engagement springs 264 ensure that the stud engagement element 260 is fully engaged to the holding feature 464 on the stud 462 before the nut socket 206 engages the driven nut 460 as the torque mechanism 102 is pushed onto the driven fastener 458. If the stud engagement and nut socket 206 are rotationally misaligned with the orientations respectively of the holding feature 464 and driven nut 460, the operator can briefly actuate the torque gun trigger 424 to cause rotation of the torque gun drive shaft 422 by a small amount until the nut socket 206 is rotationally aligned with the driven nut 460.

The example of the torque mechanism 102 shown in the figures is configured to operate on fasteners having stud diameters of 0.875 and 1.000 inch. The torque levels required for such fasteners is in the range of 600-800 foot-pounds. However, the torque mechanism 102 can be scaled up or down to accommodate fasteners of any size and which can require lower or higher torque levels. To handle relatively high torque levels, certain components of the torque mechanism 102 can be fabricated of high strength materials. For example, the nut socket 206 and the stud engagement element 260 (e.g., stud socket 262) can be fabricated of high-strength steel. However, the components of the torque mechanism 102 can be fabricated of any one or more of a variety of materials, and are not limited to steel.

Referring to Figure 35, shown is an example of the unidirectional stud clutch 246, which is configured similar to the above-described nut clutch 204. However, the stud clutch 246 is oriented opposite the orientation of the nut clutch 204 to prevent rotation of the stud engagement element 260 in the same direction as the nut socket 206. Similar to the nut clutch 204, the stud clutch 246 includes a circular array of sprag elements 210 mounted within a clutch frame 208. Each sprag element 210 has an asymmetric figure eight cross sectional shape when viewed from a top-down direction. The stud clutch 246 includes a clutch spring 212 that extends around or through the sprag elements 210. The clutch spring 212 biases the sprag elements 210 into constant contact with the inner surface of the static disc body 242 and the outer surface of the stud clutch inner race 248.

During tightening or torquing of the driven fastener 458, the rotation of the reaction nut 470 applies a rotational force in the same direction to the stud 462. The rotational force on the stud 462 is transmitted from the stud engagement element 260 (e.g., stud socket 262) to the stud clutch 246 via the stud clutch inner race 248. The rotational force causes the sprag elements 210 of the stud clutch 246 to pivot slightly, which frictionally binds the sprag elements 210 to the static disc body 242. Because the static disc body 242 is rigidly attached to the reaction arm 110 at the pedestal 120, rotation of the stud engagement element 260 (e.g., stud socket 262) is prevented. However, the sprag elements 210 are configured to slip freely over the surfaces of the static disc body 242 and stud clutch inner race 248, thereby allowing the stud engagement element 260 to rotate freely in the opposite direction as may be required to rotationally align the stud engagement element 260 with the holding feature on the stud 462 during the initial engagement or mounting of the torque mechanism 102 onto the driven fastener 458.

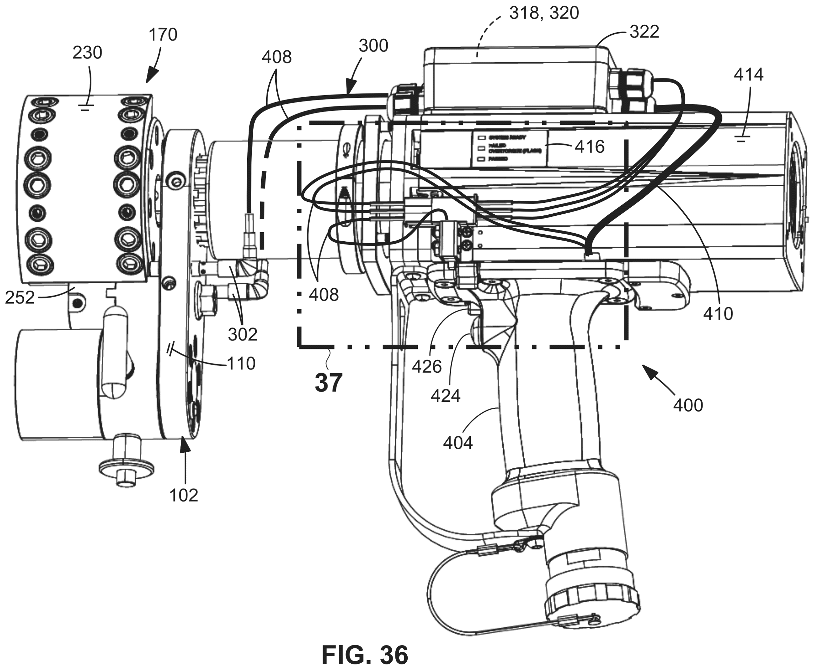

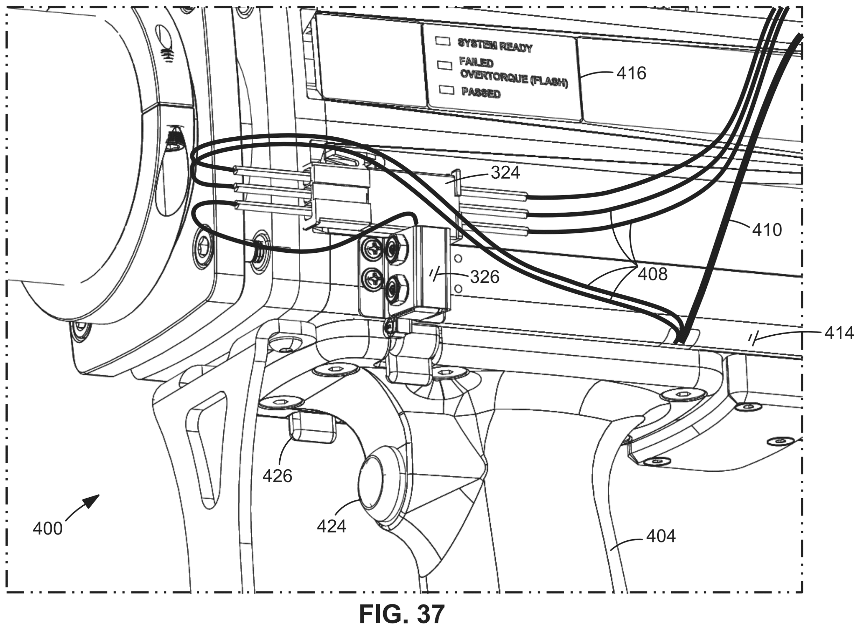

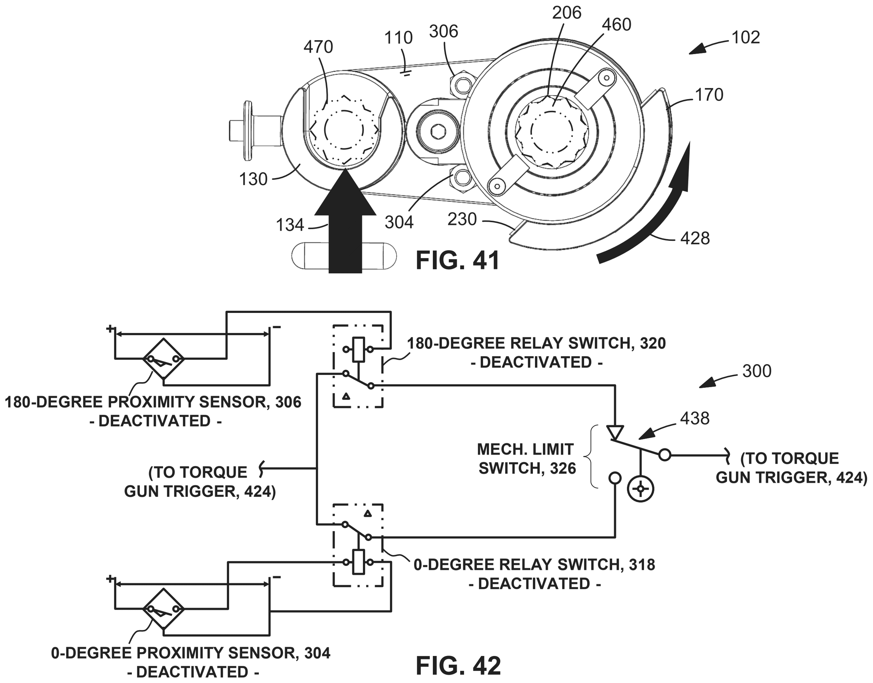

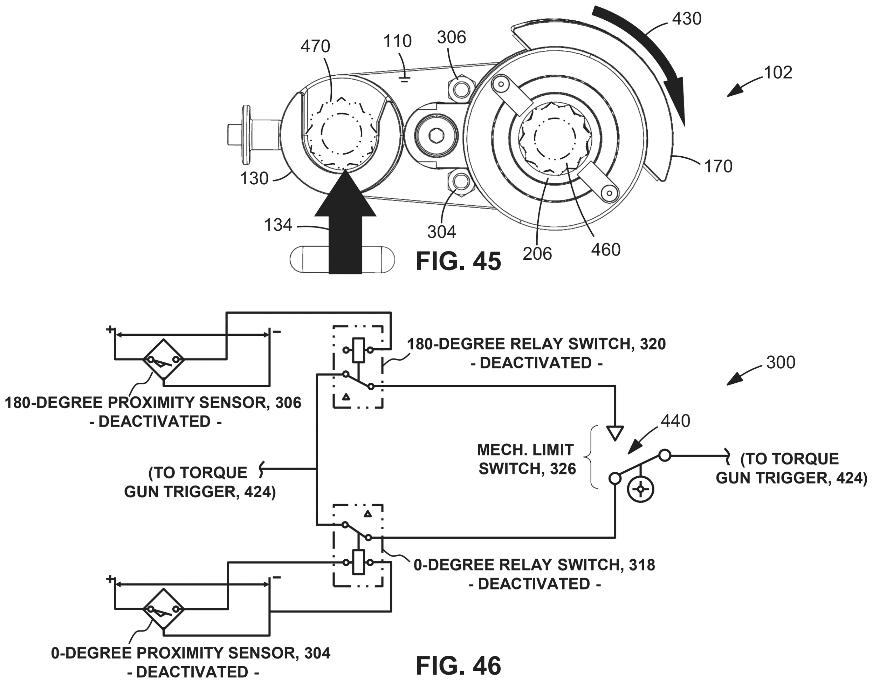

Referring to Figures 36-38, shown is an example a programmable electronic torque gun 400 for use with the torque mechanism 102. The torque gun 400 is identified as an E-Rad Blu torque gun, and is commercially available from New World Technologies, Inc., of Abbotsford, British Columbia, Canada. As shown in Figure 37, the torque gun 400 includes a torque gun trigger 424 (e.g., on-off switch) mounted on the torque gun handle 404 for activating the torque gun servo motor. In addition, the torque gun 400 includes a torque gun forward/reverse switch 426 located directly above the torque gun trigger 424. The torque gun forward/reverse switch 426 is manually movable (e.g., slidable) by an operator between a forward position 438 (Figures 40 and 42) and a reverse position 440 (Figures 44 and 46) for controlling the rotational direction (e.g., forward rotation or reverse rotation) of the torque gun servo motor.

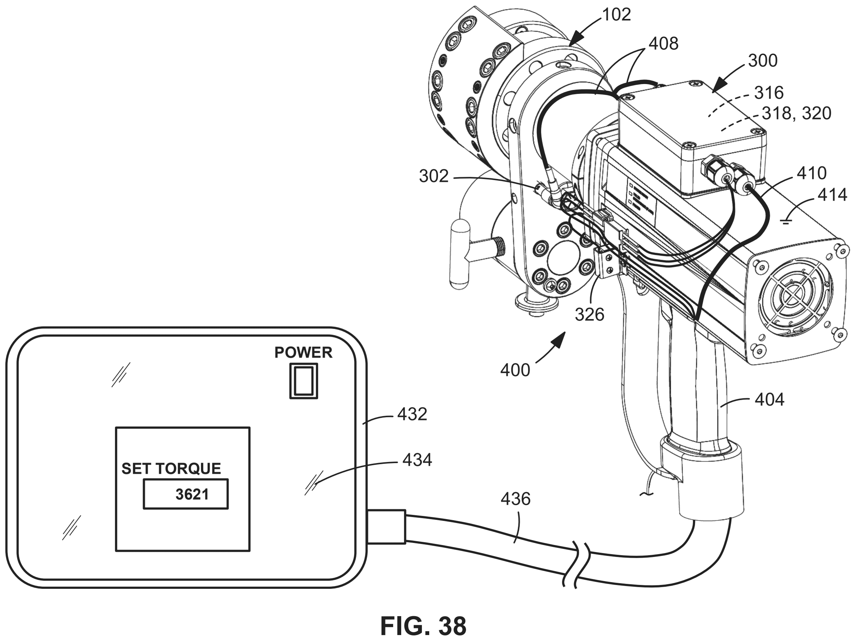

On the side of the torque gun housing 414 is a status display 416 containing three indicator lights (e.g., light-emitting diodes) that individually illuminate: (1) when the torque gun 400 is ready for use ("System Ready"), (2) when the torque cycle has "Failed" or "Overtorque" of a fastener has occurred, and (3) when the torque cycle has "Passed," indicating that the preprogrammed torque level has been achieved at the driven nut 460. Figure 38 shows a simplified version of a controller 432 configured for setting up the programmable torque gun in preparation for torquing fasteners. The controller 432 is connectable to the torque gun handle 404 via a controller cable 436. The controller 432 has a user interface 434 for entering data, such as the maximum torque (i.e., preprogrammed torque level) to be applied by the torque gun 400 to a driven nut 460.

The torque gun 400 is configured such that the torque gun servo motor will automatically stop rotating the torque gun drive shaft 422 upon detecting that the preprogrammed torque level has been achieved on the driven nut 460. In this regard, the torque gun 400 has an internal torque sensor (not shown) that measures the torque output from the torque gun servo motor, and continuously compares the torque output to the torque input (i.e., the preprogrammed torque level). Once the preprogrammed torque level is achieved, the torque gun servo motor automatically stops, and the "Passed" indicator light on the status display 416 illuminates.

Figures 36-37 show the electrical wires 408 interconnecting the various components of the rotation control circuit 300, which is integrated into the torque mechanism 102 and the torque gun 400. The rotation control circuit 300 is configured to deactivate the torque gun servo motor to halt rotation of the disc assembly 170 to prevent the arc plate 230 from colliding with the static disc arm 252 and/or pedestal 120, which would result in a false torque level being logged with the torque gun 400. If, during the initial rotational pass, the disc assembly 170 arrives at the end position 312 (Figure 43) without achieving the predetermined torque level on the driven nut 460, the unidirectional clutches (i.e., the nut clutch 204 and stud clutch 246) allow the disc assembly 170 to reverse direction and rotate back to the start position 308 (Figure 39) in preparation for a subsequent rotational pass of the disc assembly 170. As described in greater detail below, the cycle can be repeated any number of times until the preprogrammed torque level is achieved on the driven nut 460.

In the presently disclosed example of the torque mechanism 102, rotation of the disc assembly 170 is limited to 180 degrees from the start position 308 (Figure 39) to the end position 312 (Figure 43). However, in other examples not shown, the geometry of the torque mechanism 102 components (e.g., arc plate 230, static disc arm 252, pedestal 120, etc.) and the location of the proximity sensors 302 on the reaction arm 110 could potentially be configured to accommodate rotation of the disc assembly 170 through an angle greater than 180 degrees.

The rotation control circuit 300 includes at least one proximity sensor 302 (e.g., Figures 23-25) mounted on the reaction arm 110 and configured to generate a proximity signal (not shown) upon sensing the presence of one the opposing circumferential ends of the arc plate 230 of the disc assembly 170 at the start position 308 (e.g., 0-degree position 310 - Figure 37) or at the end position 312 (e.g., 180-degree position 314 - Figure 43) of its rotation via the torque gun drive shaft 422. In the example of the torque mechanism 102 shown in the figures, the rotation control circuit 300 includes a pair of proximity sensors 304, 306 (e.g., Figures 23-25) mounted on the reaction arm 110 respectively at the locations of the circumferential ends of the arc plate 230 when the disc assembly 170 is respectively at the start position 308 and the end position 312 of its rotation during a rotational pass. Each proximity sensor 302 is an electronic sensor powered by a power line 410 from the torque gun 400, such as the 24V power line powering the cooling fan (not shown) of the torque gun 400. Each proximity sensor 302 generates a continuous magnetic field. When the disc assembly 170 is at the start position 308 or the end position 312, one of the circumferential edges of the metallic arc plate 230 will disrupt the magnetic field of one of the proximity sensors 302, causing the proximity sensor 302 to generate a proximity signal.

The rotation control circuit 300 further includes at least one relay switch 316 (i.e., an electrical switch) electrically coupled to the proximity sensor 302. When the relay switch 316 receives a proximity signal from a proximity sensor 302, the relay switch 316 disables the torque gun trigger 424 (i.e., on/off switch) which interrupts the power supply to the torque gun servo motor, and thereby causes the torque gun drive shaft 422 to stop rotating when the disc assembly 170 is at the start position 308 (Figure 39) or end position 312 (Figure 43). The interruption of power supply to the torque gun servo motor via the relay switches 316 is the same action that occurs when an operator manually releases the torque gun trigger 424. In the example of Figures 36-37, the torquing system 100 includes a pair of relay switches 318, 320 (Figures 40, 42, 44, and 46) mounted in a relay switch housing 322 on top of the torque gun body 402. Each relay switch 318, 320 is electrically coupled between the torque gun trigger 424 and one of the proximity sensors 304, 306. As shown in Figure 37, electrical wires 408 from the torque gun trigger 424 exit the torque gun housing 414 and are coupled to an electrical connector 324 (e.g., wire-to-wire quick disconnect). Electrical wires 408 from the electrical connector 324 enter the relay switch housing 322 (Figure 36) for connection to the relay switches 318, 320.

In addition to proximity sensors 304, 306 and relay switches 318, 320, the rotation control circuit 300 also includes a mechanical limit switch 326 (Figure 37), which is shown mounted near the torque gun trigger 424 in Figure 36. The mechanical limit switch 326 is actuated by the torque gun forward/reverse switch 426 when moved by an operator between its forward position 438 and reverse position 440. An operator will move the torque gun forward/reverse switch 426 after the torque gun servo motor has stopped due to interruption of its power supply as a result of one of the proximity sensors 304, 306 sensing the presence of one of the circumferential edges of the disc assembly 170 at the start position 308 or end position 312. Actuation of the mechanical limit switch 326 via the torque gun forward/reverse switch 426 re-enables the torque gun trigger 424, such that when an operator manually depresses the torque gun trigger 424, the torque gun drive shaft 422 will start rotating in a direction opposite from its previous direction.

Referring to Figures 39-46, shown is the operation of the components of the rotation control circuit 300 in its different logic states during a forward-reverse cycle of the torque mechanism 102 for torquing a driven nut 460. Figures 39, 41, 43, 45 are top views of the torque mechanism 102 showing the nut socket 206 engaged to the driven nut 460 and the reaction cup 130 engaged to the reaction nut 470. Also shown are the rotational directions and positions of the disc assembly 170 at different stages of the forward-reverse cycle of torquing the driven nut 460. Figures 40, 42, 44, and 46 are schematic illustrations of the rotation control circuit 300 in the logic states corresponding to the rotational directions and positions of the disc assembly 170 at the different stages. Each schematic illustration shows the states (i.e., activation or non-activation) of the 0-degree and 180-degree proximity sensors 304, 306, the 0-degree and 180-degree relay switches 318, 320, and the mechanical limit switch 326.

Figure 39 shows the torque mechanism 102 prior to tightening (e.g., torquing) the reaction nut 470. Prior to commencing the torquing operation, the reaction nut 470 is typically run up and snugged against the structure 450 using a different tool (e.g., a non-torquing tool) to develop some degree of preload clamp force by the driven nut 460 on the structure 450. In Figure 39, the disc assembly 170 is at the start position 308, also referred to as the 0-degree position 310, and the torque gun forward/reverse switch 426 is in a forward position 438. The circumferential edge of the arc plate 230 is shown disrupting the magnetic field of the 0-degree proximity sensor 304 mounted on the reaction arm 110 at the 0-degree position 310. The disruption of the magnetic field activates the 0-degree proximity sensor 304, causing it to generate a proximity signal (not shown).

Figure 40 shows the rotation control circuit 300 in a first state which corresponds to the disc assembly 170 at the 0-degree position 310 in Figure 39. As shown in Figure 40, the proximity signal from the 0-degree proximity sensor 304 activates the 0-degree relay switch 318. When the torque gun trigger 424 is engaged (e.g., by depressing a trigger button), the torque gun servo motor starts rotating the disc assembly 170 in the first rotational direction 428 away from the 0-degree position 310.

Figure 41 shows the torque mechanism 102 as the disc assembly 170 rotates in the first rotational direction 428 away from the 0-degree position 310. Torque applied to the driven nut 460 by the nut socket 206 generates a reaction force 134, which is transmitted to the reaction nut 470 by the reaction cup 130. In Figure 41, the circumferential edge of the arc plate 230 is no longer disrupting the magnetic field of the 0-degree proximity sensor 304, which results in deactivation of the 0-degree proximity sensor 304, causing it to stop generating the proximity signal.

Figure 42 shows the rotation control circuit 300 in a second state which corresponds to the position of the disc assembly 170 in Figure 41. The lack of the proximity signal from the 0-degree proximity sensor 304 causes deactivation of the 0-degree relay switch 318. The electrical circuit to the torque gun trigger 424 is still closed, allowing the torque gun servo motor to rotate the disc assembly 170 in the first rotational direction 428 as the operator actuates the torque gun trigger 424.

Figure 43 shows the torque mechanism 102 with the disc assembly 170 at the end position 312, also referred to as the 180-degree position 314, and which indicates that the preprogrammed torque level was not achieved on the driven nut 460 during the initial rotational pass of the disc assembly 170 from the start position 308 (Figure 39) to the end position 312. In Figure 43, the torque applied to the driven nut 460 up to this point is maintained, as evidenced by the reaction force 134 at the reaction cup 130. The circumferential edge of the arc plate 230 is shown disrupting the magnetic field of the 180-degree proximity sensor 306 mounted on the reaction arm 110 at the180-degree position 314. The disruption of the magnetic field activates the 180-degree proximity sensor 306, causing it to generate a proximity signal (not shown).

Figure 44 shows the rotation control circuit 300 in a third state, which corresponds to the disc assembly 170 at the 180-degree position 314 in Figure 43. As shown in Figure 44, the proximity signal from the 180-degree proximity sensor 306 activates the 180-degree relay switch 320, which disables the torque gun trigger 424 (i.e., on/off switch) and interrupts the power supply to the torque gun servo motor, causing the torque gun drive shaft 422 to stop rotating. As mentioned above, interrupting the power supply to the torque gun servo motor prevents the arc plate 230 from colliding with the static disc arm 252 and/or other components of the torque mechanism 102, which would generate a false torque level that would be logged by the torque gun 400.

In Figure 44, the torque gun forward/reverse switch 426 is shown moved to a reverse position 440, such that when the torque gun trigger 424 is actuated by the operator, the torque gun servo motor rotates the disc assembly 170 away from the 180-degree position 314 in a second rotational direction 430 (Figure 45) opposite the first rotational direction 428 (Figure 41). Advantageously, the combination of the unidirectional clutches (i.e., nut clutch 204 and stud clutch 246) allows the disc assembly 170 to reverse direction back toward the 0-degree position 310 without loss of torque in the driven nut 460 and while the stud engagement element 260 continues to hold the stud 462 from turning.

Figure 45 shows the torque mechanism 102 as the disc assembly 170 rotates in the second rotational direction 430 away from the 180-degree position 314. The torque applied to the driven nut 460 up to this point is still maintained, as evidenced by the continuous reaction force 134 at the reaction cup 130. In Figure 45, the circumferential edge of the arc plate 230 is no longer disrupting the magnetic field of the 180-degree proximity sensor 306, which results in the deactivation of the 180-degree proximity sensor 306, causing it to stop generating the proximity signal.

Figure 46 shows the rotation control circuit 300 in a fourth state, which corresponds to the position of the disc assembly 170 in Figure 45. The lack of the proximity signal from the 180-degree proximity sensor 306 causes deactivation of the 180-degree relay switch 320. The electrical circuit to the torque gun trigger 424 (i.e., on-off switch) is still closed, allowing the torque gun servo motor to rotate the disc assembly 170 in the second rotational direction 430 as the operator actuates the torque gun trigger 424.

Although not shown, when the disc assembly 170 arrives back at the 0-degree position 310, the circumferential edge of the arc plate 230 will disrupt the magnetic field of the 0-degree proximity sensor 304, causing it to generate a proximity signal that will activate the 0-degree relay switch 318, which will disable the torque gun trigger 424 (i.e., on/off switch) and cause the torque gun drive shaft 422 to stop rotating, thereby preventing the arc plate 230 from colliding with the static disc arm 252. With the torque gun drive shaft 422 stopped, the torque gun forward/reverse switch 426 can be moved back to the forward position 438, such that when the torque gun trigger 424 is actuated by the operator, the torque gun servo motor will again rotate the disc assembly 170 in the first rotational direction 428 away from the 0-degree position 310 to perform another rotational pass. The cycle can be repeated any number of times until the preprogrammed torque level has been achieved on the driven nut 460. When the preprogrammed torque level on the driven nut 460 is achieved, the torque gun 400 automatically halts rotation of the torque gun drive shaft 422, after which the torque mechanism 102 can be removed from the driven nut 460 and reaction nut 470.

Advantageously, by performing one or more subsequent rotational passes (i.e., forward-reverse cycles) until achieving the preprogrammed torque level on the driven nut 460, the torque mechanism 102 significantly reduces the amount of time required to torque fasteners. For example, the presently disclosed torque mechanism 102 requires approximately three seconds to torque fasteners, as compared to a known torque reaction device, which requires 30 seconds for torquing the same fasteners to the same torque levels. In this regard, the torque mechanism 102 is approximately 10 times faster than the known torque reaction device.

Another advantage of the presently-disclosed torque mechanism 102 is that the nut clutch 204 of the driven disc subassembly 200 and the stud clutch 246 of the static disc subassembly 240 can each be installed in either a first orientation or a second orientation, which is the reversal of the first orientation. As described above, the orientation of the nut clutch 204 is necessarily opposite the orientation of the stud clutch 246, as shown in Figures 30 and 33. As such, when the nut clutch 204 is installed in the first orientation, the stud clutch 246 is installed in the second orientation, and the torque mechanism 102 is in a tightening configuration 104 for tightening the driven nut 460 on the stud 462. Figures 7-46 illustrate an example of the torque mechanism 102 in the tightening configuration 104 for torquing the driven nut 460 on the stud 462 in the manner described above and shown in Figures 39, 41, 43, and 45. In the tightening mechanism, the reaction cup 130 is oriented such that the cup opening 132 faces in the direction of the reaction force 134 on the reaction fastener 468.

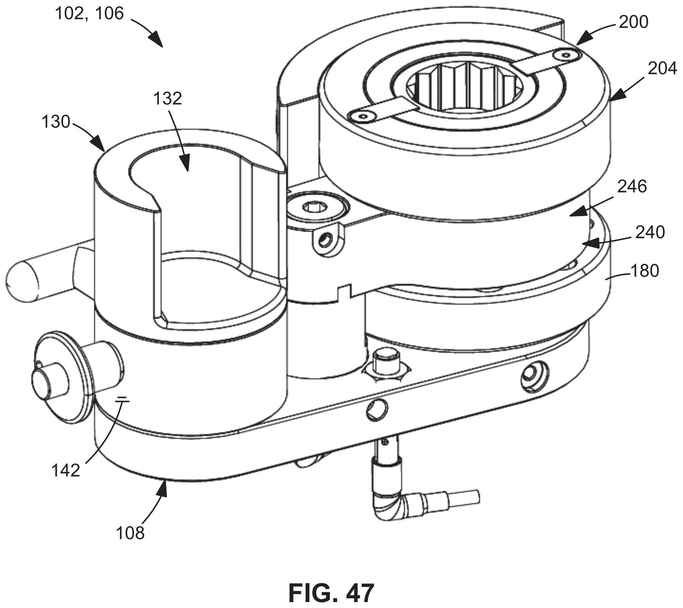

Referring to Figures 47-49, shown is an example of the torque mechanism 102 in a loosening configuration 106 for loosening a driven nut 460 from a stud 462. The loosening configuration 106 of the torque mechanism 102 contains the same components as the tightening configuration 104 shown in Figures 7-46. However, in the loosening configuration 106, the nut clutch 204 and stud clutch 246 are installed in reverse orientation to their orientations in Figures 30 and 33, and a different reaction cup 130 is installed having a reaction cup 130 opening that faces in the opposite direction.

Advantageously, the reaction arm assembly 108 is configured to facilitate reconfiguration of the torque mechanism 102 from the tightening configuration 104 to the loosening configuration 106, and vice versa. For example, the reaction cup 130 and the cup support fitting 142 on which it is mounted can each be provided in two different configurations that are complementary respectively to the tightening configuration 104 and the loosening configuration 106 of the torque mechanism 102. When viewed from a top-down direction, the reaction cup 130 and the cup support fitting 142 of the tightening configuration 104 (e.g., Figure 12) are mirror images respectively of the reaction cup 130 and cup support fitting 142 of the loosening configuration 106 (Figure 47). Regardless of the configuration of the reaction cup 130, the cup opening 132 faces toward the direction of the reaction force 134 it transfers to the reaction fastener 468 when the nut socket 206 rotates the driven nut 460.

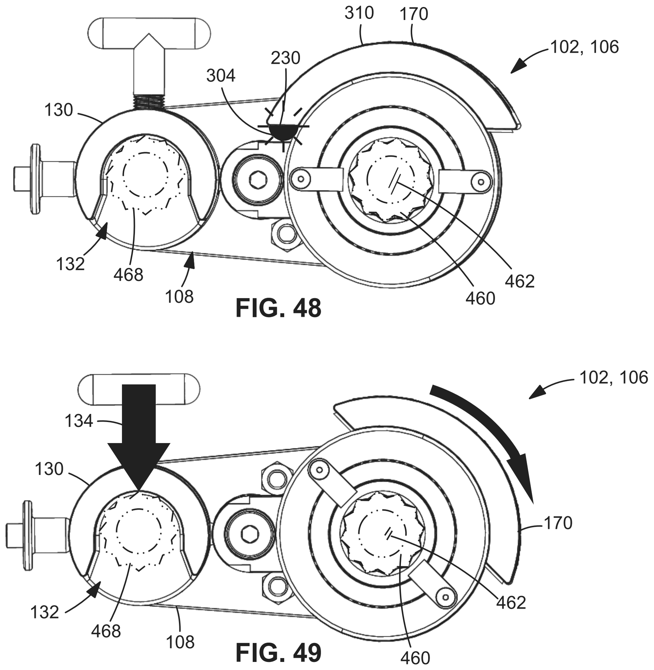

Referring to Figures 48-49, shown is an example of the operation of the loosening configuration 106 of the torque mechanism 102 when loosening a reaction nut 470 mounted on a stud 462. With the exception of the movement directions of some of the torque mechanism 102 components and the initial placement of the torque gun forward/reverse switch 426 (Figure 37) in the reverse position 440, the operation for the loosening configuration 106 is similar to the above-described operation for the tightening configuration 104. Figure 48 is a top view of the loosening configuration 106 showing the disc assembly 170 at the 0-degree position 310 (which is the 180-degree position 314 for the tightening configuration 104). The circumferential edge of the arc plate 230 is disrupting the magnetic field of the 0-degree proximity sensor 304, causing it to generate a proximity signal (not shown), which activates the 0-degree relay switch 318 (not shown). When the torque gun trigger 424 is engaged (e.g., the trigger button is depressed by an operator), the torque gun servo motor starts rotating the disc assembly 170 away from the 0-degree position 310.

Figure 49 shows the loosening configuration 106 of the torque mechanism 102 as the disc assembly 170 rotates away from the 0-degree position 310 while loosening the driven nut 460 on the stud 462. The rotational force of loosening the driven nut 460 generates a reaction force 134 which is transmitted to the reaction fastener 468 by the reaction cup 130. In Figure 49, the circumferential edge of the arc plate 230 is no longer disrupting the magnetic field of the 0-degree proximity sensor 304, which results in the deactivation of the 0-degree proximity sensor 304, causing it to stop generating the proximity signal, which deactivates the 0-degree relay switch 318. The electrical circuit to the torque gun trigger 424 (i.e., on-off switch) is still closed, allowing the torque gun servo motor to rotate the disc assembly 170 as the operator actuates the torque gun trigger 424.

Although not shown, when the disc assembly 170 arrives at the 180-degree position 314 (which is the 0-degree position 310 for the tightening configuration 104), the circumferential edge of the arc plate 230 disrupts the magnetic field of the 180-degree proximity sensor 306, causing it to generate a proximity signal that activates the 180-degree relay switch 320. Activation of the 180-degree relay switch 320 disables the torque gun trigger 424 (i.e., on/off switch) and interrupts the power supply to the torque gun servo motor, causing the torque gun drive shaft 422 to stop rotating, thereby preventing the arc plate 230 from colliding with the static disc arm 252.

If the driven nut 460 still requires loosening from the stud 462 after rotating 180 degrees, the torque gun forward/reverse switch 426 can be moved to the forward position 438, such that when the torque gun trigger 424 is actuated by the operator, the torque gun servo motor rotates the disc assembly 170 back toward the 0-degree position 310. Advantageously, the combination of the nut clutch 204 and stud clutch 246 allows the disc assembly 170 to reverse direction back to the 0-degree position 310 without rotating the driven nut 460 and while the stud engagement element 260 continues to hold the stud 462 from turning. The cycle can be repeated any number of times until the driven nut 460 is sufficiently loosened from the stud 462.

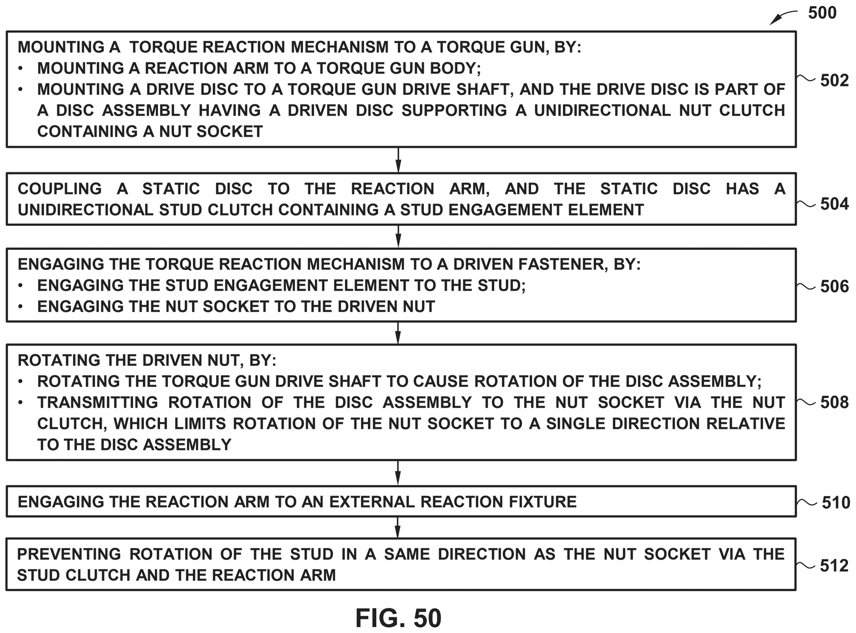

Referring to Figure 50, shown is a method 500 of rotating a driven nut 460 on a stud 462 of a driven fastener 458. For examples where the torque gun 400 is a programmable electronic torque gun 400 (Figures 36-38), the method 500 can include connecting the torque gun 400 to a controller 432 via a controller cable 436 as shown in Figure 38. The method 500 can then include entering data into the controller 432, such as the maximum torque (i.e., preprogrammed torque level) to be applied by the torque gun 400 to the driven nut 460.

Step 502 of the method 500 includes mounting the torque mechanism 102 to the torque gun 400, which includes mounting the reaction arm 110 to the torque gun body 402, and mounting the drive disc 180 to the torque gun drive shaft 422. Referring to Figures 9-11, mounting the reaction arm 110 to the torque gun body 402 includes engaging the reaction arm engagement element 112 to the torque gun engagement element 418. In the example shown, the reaction arm engagement element 112 is an opening in the reaction arm 110 formed in the shape of a female spline 114. The torque gun engagement element 418 is an external feature in the shape of a male spline 420 near the torque gun drive shaft 422. After the female spline 114 of the reaction arm 110 is mounted on the male spline 420 of the torque gun 400, the reaction arm retaining ring 116 (e.g., snap ring - Figure 18) is secured to the torque gun body 402 to retain the reaction arm 110 in position on the torque gun 400.

Mounting the drive disc 180 to the torque gun drive shaft 422 in step 502 involves inserting the torque gun drive shaft 422 into the drive socket 182 of the drive disc 180 after the reaction arm 110 is mounted on the torque gun 400. In the example of Figures 9-11, the torque gun drive shaft 422 is a square drive protruding from the end of the torque gun body 402. The drive disc 180 can be mounted to the torque gun drive shaft 422 while the drive disc 180 is assembled with the driven disc subassembly 200 and arc plate 230 as part of the disc assembly 170 shown in Figures 18-20. Alternatively, the drive disc 180 can be separately mounted to the torque gun drive shaft 422, after which the driven disc subassembly 200 can be coupled to the drive disc 180 via the arc plate 230 to thereby form the disc assembly 170.

Step 504 of the method 500 includes coupling the static disc subassembly 240 to the reaction arm 110. As described above, the static disc subassembly 240 has a static disc body 242 containing the unidirectional stud clutch 246. The static disc body 242 includes a static disc arm 252. When the static disc subassembly 240 is positioned between the drive disc 180 and the driven disc subassembly 200, the static disc arm 252 can be mechanically fastened to the pedestal 120 via the pedestal bolt 128 on the upper side of the static disc arm 252. The pedestal 120 is mounted on the reaction arm 110 as shown in Figures 26-27. The underside of the static disc arm 252 has arm slots 254 configured to receive the pedestal bosses 127 on the top of the pedestal 120. The interlocking of the arm slots 254 with the pedestal bosses 127 prevents rotation of the static disc subassembly 240 relative to the pedestal 120. The coupling of the static disc subassembly 240 to the reaction arm 110 in step 504 can be performed simultaneous with or after mounting the drive disc 180 to the torque gun drive shaft 422 in step 502.

Step 506 of the method 500 includes engaging the torque mechanism 102 to the driven fastener 458 by engaging the stud engagement element 260 to the stud 462 and engaging the nut socket 206 to the driven nut 460. In Figure 5, the stud engagement element 260 is a 6-point stud socket 262 that is axially engaged to a hex-shaped holding feature 464 formed on the end of the stud 462 of the driven fastener 458. However, as indicated above, the holding feature 464 on the stud 462 may be provided in any one of a variety of shapes. In the example of Figures 3-8, the nut socket 206 is a 12-point socket that is engaged to a 12-point driven nut 460. However, the nut socket 206 can be provided in any one of a variety of alternative shapes for engaging a similarly-shaped driven nut 460.

In some examples, step 506 includes axially biasing the stud engagement element 260 toward the stud 462 to accommodate differences in protrusion of the stud 462 from the driven nut 460 at different fastener locations. As shown in Figure 16, 29, and 34, the stud socket 262 is axially biased onto the stud 462 via a plurality of stud engagement springs 264 (e.g., coil springs). The stud engagement springs 264 ensure that the stud engagement element 260 engages the holding feature 464 before the nut socket 206 engages the driven nut 460. If the nut socket 206 is unable to engage the driven nut 460 due to rotational misalignment with the driven nut 460 when pushing the torque mechanism 102 onto the driven fastener 458, step 506 can include briefly actuating (e.g., bumping) the torque gun trigger 424 to slightly rotate the nut socket 206 until it is aligned with the driven nut 460.

Step 508 of the method 500 includes rotating (e.g., torquing) the driven nut 460, by rotating the torque gun drive shaft 422 to cause rotation of the disc assembly 170. Step 508 also includes transmitting rotation of the disc assembly 170 to the nut socket 206 via the nut clutch 204, which limits rotation of the nut socket 206 to a single direction relative to the disc assembly 170. As described below, limiting rotation of the nut socket 206 to a single direction allows the disc assembly 170 to rotate freely in the opposite direction during reverse rotation of the torque gun drive shaft 422 without rotating the nut socket 206, which allows for one or more subsequent rotational passes of the disc assembly 170 if, during the initial rotational pass, the driven nut 460 is not torqued to the predetermined (e.g., preprogrammed) torque level. Advantageously, the disc assembly 170 can be reversed in direction any number of times without loss of torque in the driven nut 460.

Step 510 of the method 500 includes engaging the reaction arm 110 to an external reaction feature 466. In the example of Figures 8, 39, 41, 43, and 45, the reaction feature 466 comprises the reaction nut 470 of the reaction fastener 468, which is located immediately adjacent to the driven fastener 458. However, in other examples not shown, the reaction feature 466 can be any fixed or non-movable structural element capable of counteracting the reaction force 134 transmitted by the reaction arm 110 during torquing of the driven nut 460. In the present example of the torque mechanism 102, engaging the reaction arm 110 to the external reaction feature 466 comprises laterally rotating the reaction cup 130 into the reaction feature 466 after the nut socket 206 and stud engagement element 260 are engaged to the driven fastener 458.

In step 510, the reaction arm 110 rotates the reaction cup 130 into the reaction feature 466 (e.g., reaction nut 470), which is received in the cup opening 132 formed on one side of a reaction cup 130. It should be noted that if the reaction cup 130 contacts or engages the reaction feature 466 (e.g., the reaction nut 470) when pushing the torque mechanism 102 onto the driven fastener 458, it is not possible to rotate the driven nut 460 to align it with the nut socket 206. For this reason, installation of the torque mechanism 102 requires fully engaging the stud socket 262 and nut socket 206 onto the driven fastener 458, and then briefly actuating (e.g., bumping) the torque gun trigger 424 to rotate the reaction arm 110 to laterally swing the reaction cup 130 into the cup opening 132.

Step 512 of the method 500 includes preventing rotation of the stud 462 in the same direction as the nut socket 206 via the stud clutch 246 and the reaction arm 110. As described above with regard to Figures 30-32, when torquing the driven nut 460, the unidirectional nut clutch 204 rotationally drives the nut socket 206 during rotation of the driven disc body 202 in one direction. The reaction arm 110 transmits to the reaction fastener 468 the reaction force 134 (Figures 41, 43, 45) generated when torquing the driven nut 460. The rotation of the driven nut 460 results in a rotational force in the same direction on the stud 462. The rotational force on the stud 462 is transmitted from the holding feature 464 to the stud engagement element 260 , and ultimately to the stud clutch 246 via the stud clutch inner race 248. In response to the rotational force, the sprag elements 210 of the stud clutch 246 pivot slightly, which frictionally binds the sprag elements 210 to the static disc body 242. The static disc body 242 is rigidly attached to the reaction arm 110 at the pedestal 120, which prevents rotation of the stud engagement element 260 and stud 462.

Referring to Figures 39-46, the method 500 can include semi-autonomous control of the rotational motion of the disc assembly 170 during one or more tightening passes that can be performed on the driven nut 460 if the initial tightening pass does not achieve the preprogrammed torque level. In this regard, the method 500 includes generating, using at least one proximity sensor 302 mounted on the reaction arm 110, a proximity signal upon sensing the disc assembly 170 at either a start position 308 or an end position 312 of its rotation. In the example of Figures 39-46, the method 500 includes generating a proximity signal by one of a pair of proximity sensors 304, 306 respectively at the start position 308 (e.g., 0-degree position 310 - Figure 37) and end position 312 (e.g., 180-degree position 314 - Figure 43) on the reaction arm 110.

In addition, the method 500 includes disabling, using at least one relay switch 316, the torque gun trigger 424 when the relay switch 316 receives a proximity signal, to thereby cause the torque gun drive shaft 422 to autonomously stop rotating when the disc assembly 170 arrives at the start position 308 or end position 312. As described above, the torquing system 100 includes a 0-degree relay switch 318 and a 180-degree relay switch 320, which are mounted in the relay switch housing 322 on top of the torque gun body 402 in Figures 36 and 38. The 0-degree relay switch 318 is electrically coupled to the 0-degree proximity sensor 304, and the 180-degree relay switch 320 is electrically coupled to the 180-degree proximity sensor 306.

The method 500 includes disabling the torque gun trigger 424 when one of the relay switches 318, 320 receives a proximity signal respectively from a corresponding proximity sensor 304, 306, and causing the torque gun drive shaft 422 to stop rotating when the disc assembly 170 arrives respectively at the start position 308 (e.g., 0-degree position 310 - Figure 37) or end position 312 (e.g., 180-degree position 314 - Figure 43). For example, Figure 43 shows the disc assembly 170 arriving at the end position 312, which causes the 180-degree proximity sensor 306 to generate a proximity signal that activates the 180-degree relay switch 320, which disables the torque gun trigger 424, and stops further rotation of the disc assembly 170. Autonomously stopping rotation of the disc assembly 170 at the start position 308 and end position 312 prevents the arc plate 230 from rotating into other components, such as the static disc arm 252 and the pedestal 120, which would result in a false torque level being logged by the electronic torque gun 400. As mentioned above, the act of disabling the torque gun trigger 424 is the same action that occurs when an operator manually releases the torque gun trigger 424.

Upon disabling the torque gun trigger 424, the method 500 includes moving the torque gun forward/reverse switch 426 from the forward position 438 to the reverse position 440, or from the reverse position 440 to the forward position 438, depending on the most recent location of the torque gun forward/reverse switch 426. As described above and shown in Figure 37, the torque gun forward/reverse switch 426 is located near the torque gun trigger 424, and is manually slidable between a forward position 438 and a reverse position 440. Figures 42 and 44 schematically illustrate movement of the torque gun trigger 424 from the forward position 438 (Figure 42) to the reverse position 440 (Figure 43). The act of moving the torque gun forward/reverse switch 426 actuates the mechanical limit switch 326, which re-enables the torque gun trigger 424. Once the torque gun trigger 424 is re-enabled, the operator can actuate the torque gun trigger 424 (e.g., depress the on-off button) to restart rotation of the torque gun drive shaft 422 in the forward direction or reverse direction.

The method 500 can include rotating the nut socket 206 through one or more forward-reverse cycles until the preprogrammed torque level is achieved at the driven nut 460. Some examples of the method 500 can be implemented using the above-described programmable electronic torque gun 400, which is configured to automatically stop rotating the disc assembly 170 at any point during its rotation upon detecting that the preprogrammed torque level has been achieved on the driven nut 460. Upon achieving the preprogrammed torque level, the torque level is logged by the torque gun 400, and the "Passed" indicator light on the status display 416 illuminates.

Upon completing the torquing process, the torque mechanism 102 is removed from the driven fastener 458 and reaction fastener 468. In some examples, the method 500 requires releasing windup pressure generated in the torque mechanism 102 using a torque windup release mechanism 150 integrated into the reaction arm assembly 108, to thereby allow for removal of the torque mechanism 102 from the reaction feature 466 and driven fastener 458. In the example of Figures 18-20, releasing windup pressure is achieved by unscrewing the threaded shaft 152 (e.g., a T-handle bolt) installed in a threaded hole 154 in the cup support fitting 142, which is located between the reaction cup 130 and the reaction arm 110. As described above, the cup support fitting 142 includes a support fitting slot 146 into which the reaction cup base portion 136 is inserted. The reaction cup base portion 136 is shorter than the support fitting slot 146, which results in a gap at one end of the support fitting slot 146 when the threaded shaft 152 clamps the reaction cup base portion 136 against the end of the support fitting slot 146. By unscrewing the threaded shaft 152, windup pressure in the torque mechanism 102 causes the reaction base portion to slide into the gap, which allows the reaction arm 110 to rotate slightly, thereby releasing the windup pressure and allowing the torque mechanism 102 to be removed from the driven fastener 458 and reaction fastener 468.

In some examples, the method 500 includes reconfiguring the torque mechanism 102 from a tightening configuration 104 (Figures 3-46) for torquing fasteners, into a loosening configuration 106 (Figures 47-49) for loosening fasteners, or reconfiguring the torque mechanism 102 from the loosening configuration 106 to the tightening configuration 104. Reconfiguring the torque mechanism 102 between the tightening configuration 104 and the loosening configuration 106, involves installing each of the nut clutch 204 and stud clutch 246 in either a first orientation or a second orientation (which is a reversal of the first orientation), and such that the orientation of the nut clutch 204 is opposite the orientation of the stud clutch 246. If the torque mechanism 102 is reconfigured into the tightening configuration 104 as shown in Figures 8, 30, 33, 39-46, the method 500 can include tightening a driven nut 460 on a stud 462 using the torque mechanism 102 in which the nut clutch 204 is installed in the first orientation and the stud clutch 246 is installed in the second orientation, and rotation of the nut socket 206 is limited to a first rotational direction 428.

If the torque mechanism 102 is reconfigured into the loosening configuration 106 as shown in Figures 47-49, the method 500 can include loosening a driven nut 460 on a stud 462 using the torque mechanism 102 in which the nut clutch 204 is installed in the second orientation and the stud clutch 246 is installed in the first orientation, and rotation of the nut socket 206 is limited to the second rotational direction 430 opposite the first rotational direction 428. Reconfiguration of the torque mechanism 102 into either the tightening configuration 104 or the loosening configuration 106 requires replacing the existing reaction cup 130 with a reaction cup 130 having a cup opening 132 that faces in the opposite direction from the existing reaction cup 130, so that the cup opening 132 will face toward the direction of the reaction force 134 generated when the nut socket 206 rotationally drives (i.e., tightens or loosens) the driven nut 460.

Advantageously, the presently-disclosed torquing system 100 has an in-line configuration in which the rotational axis of the torque gun drive shaft 422 is coincident with the central axis 172 of the torque mechanism 102. In addition, the driven disc subassembly 200, the static disc subassembly 240, and the drive disc 180 are all coaxially aligned with each other. The alignment of the torque gun 400 rotational axis with the central axis 172 of the torque mechanism 102, and the coaxial alignment of the disc subassemblies results in a torquing system 100 that is smaller in size and lighter in weight than a known torquing system for the same purpose. For example, the combined weight of the torque mechanism 102 and electronic torque gun 400 is approximately 33 percent lower than the known torquing system configured for torquing fasteners of the same size. The reduced size and weight of the presently-disclosed torquing system 100 allow it to be held and operated by a single mechanic, which is a significant improvement over the known torquing system which requires two mechanics to hold in place and operate.

In addition to the above-noted advantages, the presently-disclosed torquing system 100 has improved ergonomics, is easier to operate, and enables torquing fasteners in a significantly reduced amount of time relative to other known torquing system. For example, the presently-disclosed torquing system 100 requires approximately three seconds to torque a 1.0 inch diameter fastener, as compared to other known torquing systems which require approximately 30 seconds for torquing the same fastener to the same torque level. The electronic torque gun 400 used in the presently-disclosed torquing system 100 is also easier to set up and operate than pneumatic torque guns used in other known torquing systems, which require periodic calibration checks - such as after the assembly of each aircraft in a commercial production program - to ensure they are operating within acceptable limits. Furthermore, the electronic torque gun 400 of the presently-disclosed torquing system 100 provides a precise input torque due to computer controls, and the set point torques are fully programmable, which improves consistency and repeatability in torquing multiple fasteners to the same torque level. Finally, the presently-disclosed torquing system 100 has improved reliability and a longer service life than other known torquing systems, which require periodic repairs that result in production downtime and which can require replacement of expensive parts.

Further examples are set out in the clauses below:
1. A torque mechanism for use with a torque gun for rotating a driven nut mounted on a stud of a driven fastener, comprising:
   a reaction arm configured to be mounted to a torque gun housing;
   a rotatable disc assembly, comprising:
      a drive disc configured to be mounted to a torque gun drive shaft;
      a driven disc body coaxially aligned with the drive disc;
      an arc plate interconnecting the drive disc and the driven disc body;
      a unidirectional nut clutch supported by the driven disc body and containing a nut socket configured to engage the driven nut, and the nut clutch limits rotation of the nut socket to a single direction relative to the disc assembly;
      a static disc body located between the drive disc and the driven disc body and fixedly coupled to the reaction arm; and
      a unidirectional stud clutch supported by the static disc body and containing a stud engagement element configured to engage the stud, and the stud clutch prevents rotation of the stud engagement element in a same direction as the nut socket when the reaction arm is engaged to an external reaction feature.
2. The torque mechanism of Clause 1, further comprising a rotation control circuit, including:
   at least one proximity sensor mounted on the reaction arm, and configured to generate a proximity signal upon sensing the disc assembly at one of a start position and an end position of its rotation; and
   at least one relay switch configured to disable a torque gun trigger when the relay switch receives the proximity signal and causes the torque gun drive shaft to stop rotating when the disc assembly arrives at one of the start position and end position.
3. The torque mechanism of Clause 2, wherein:
   the at least one proximity sensor comprises a pair of proximity sensors mounted on the reaction arm respectively at the start position and end position of the disc assembly;
   the at least one relay switch comprises a pair of relay switches configured to disable the torque gun trigger upon receiving a proximity signal respectively from the pair of proximity sensors for stopping the disc assembly respectively at the start position and end position; and
   the rotation control circuit includes a mechanical limit switch configured to be mounted on a torque gun body and actuatable by a torque gun forward/reverse switch in a manner causing the mechanical limit switch to re-enable the torque gun trigger for re-starting rotation of the torque gun drive shaft in one of a forward direction and a reverse direction after the disc assembly stops respectively at the start position and end position.
4. The torque mechanism of any one of the preceding Clauses, wherein:
   the stud engagement element is axially biased toward an opening in the nut socket, to accommodate differences in protrusion of the stud from the driven nut at different fastener locations.
5. The torque mechanism of any one of the preceding Clauses, wherein:
   the reaction arm is part of reaction arm assembly having a reaction cup configured to be coupled to the reaction arm and having a cup opening configured to receive the reaction feature as the reaction arm rotates into the reaction feature after the torque mechanism is engaged to the driven nut and stud.
6. The torque mechanism of Clause 5, further comprising:
   a torque windup release mechanism integrated into the reaction arm assembly and configured to release windup pressure generated in the torque mechanism during torquing of the driven nut, to thereby allow for removal of the torque mechanism from the reaction feature and driven fastener.
7. The torque mechanism of Clause 6, wherein:
   the reaction arm assembly comprises a cup support fitting configured to be mounted on the reaction arm and having a support fitting slot formed in one end of the cup support fitting;
   the torque windup release mechanism comprises a threaded shaft extendable into a side of the cup support fitting;
   wherein:
      the reaction cup includes a reaction cup base portion configured to be received in the support fitting slot, and the reaction cup base portion is shorter than the support fitting slot, resulting in a gap between the reaction cup base portion and an end of the support fitting slot;
      the threaded shaft is rotatable in a manner to clamp the reaction cup base portion against the end of the support fitting slot opposite the threaded shaft; and
      the threaded shaft is rotatable in a reverse direction in a manner allowing the reaction cup base portion to slide toward the gap in the support fitting slot, thereby releasing the windup pressure in the torque mechanism.
8. The torque mechanism of any one of the preceding Clauses, wherein:
   each of the nut clutch and stud clutch is configured to be installed in either a first orientation or a second orientation that is a reversal of the first orientation;
   the nut clutch and stud clutch are installed in opposite orientations;
   when the nut clutch is installed in the first orientation and the stud clutch is installed in the second orientation, the torque mechanism is in a tightening configuration for tightening a nut on a fastener; and
   when the nut clutch is installed in the second orientation and the stud clutch is installed in the first orientation, the torque mechanism is in a loosening configuration for loosening a nut on a fastener.
9. A torquing system for torquing a driven nut on a stud of a driven fastener, comprising:
   a torque gun having a torque gun housing and a torque gun drive shaft;
   a torque mechanism, comprising:
      a reaction arm mounted to the torque gun housing;
      a rotatable disc assembly, comprising:
         a drive disc mounted to the torque gun drive shaft;
         a driven disc body coaxially aligned with the drive disc;
         an arc plate interconnecting the drive disc and the driven disc body;
         a unidirectional nut clutch supported by the driven disc body and containing a nut socket configured to engage the driven nut, and the nut clutch limits rotation of the nut socket to a single direction relative to the disc assembly;
         a static disc body located between the drive disc and the driven disc body and fixedly coupled to the reaction arm; and
         a unidirectional stud clutch supported by the static disc body and containing a stud engagement element configured to engage the stud, and the stud clutch prevents rotation of the stud engagement element in a same direction as the nut socket when the reaction arm is engaged to an external reaction feature.
10. The torquing system of Clause 9, further comprising:
   a rotation control circuit, including:
   a proximity sensor mounted on the reaction arm, and configured to generate a proximity signal upon sensing the disc assembly at one of a start position and an end position of its rotation;
   a relay switch mounted on a torque gun body and configured to disable a torque gun trigger when the relay switch receives the proximity signal, causing the torque gun drive shaft to stop rotating when the disc assembly arrives at one of the start position and end position; and
   a mechanical limit switch mounted on the torque gun body and actuatable by a torque gun forward/reverse switch in a manner causing the mechanical limit switch to re-enable the torque gun trigger for re-starting rotation of the torque gun drive shaft in one of a forward direction and
   a reverse direction after the disc assembly stops at one of the start position and end position.
11. The torquing system of Clause 9, wherein:
   the torque gun is a programmable electronic torque gun configured to rotate the torque gun drive shaft through one or more forward-reverse cycles until a preprogrammed torque level is achieved at the driven nut.
12. A method of rotating a driven nut on a stud of a driven fastener, comprising:
   mounting a torque mechanism to a torque gun, by:
   mounting a reaction arm to a torque gun body;
   mounting a drive disc to a torque gun drive shaft, and the drive disc is part of a disc assembly having a driven disc subassembly having a unidirectional nut clutch containing a nut socket;
   coupling a static disc subassembly to the reaction arm, and the static disc subassembly has a unidirectional stud clutch containing a stud engagement element;
   engaging the torque mechanism to a driven fastener, by:
      engaging the stud engagement element to the stud;
      engaging the nut socket to the driven nut;
      rotating the driven nut, by:
         rotating the torque gun drive shaft to cause rotation of the disc assembly;
         transmitting rotation of the disc assembly to the nut socket via the nut clutch, which limits rotation of the nut socket to a single direction relative to the disc assembly;
         engaging the reaction arm to an external reaction feature; and
         preventing rotation of the stud in a same direction as the nut socket via the stud clutch and the reaction arm.
13. The method of Clause 12, further comprising:
   generating, using at least one proximity sensor mounted on the reaction arm, a proximity signal upon sensing the disc assembly at one of a start position and an end position of its rotation; and
   disabling, using at least one relay switch, a torque gun trigger when the relay switch receives the proximity signal, and thereby causing the torque gun drive shaft to stop rotating when the disc assembly arrives at one of the start position and end position.
14. The method of Clause 13, wherein the steps of generating a proximity signal and disabling a torque gun trigger respectively comprise:
   generating a proximity signal by one of a pair of proximity sensors respectively at one of the start position and end position;
   disabling the torque gun trigger when one of a pair of relay switches receives a proximity signal respectively from one of the pair of proximity sensors, and causing the torque gun drive shaft to stop rotating when the disc assembly arrives respectively at one of the start position and end position;
   further comprising:
      moving a torque gun forward/reverse switch between a forward position and a reverse position; and
      actuating a mechanical limit switch in response to movement of the torque gun forward/reverse switch, and re-enabling the torque gun trigger for re-starting rotation of the torque gun drive shaft in one of a forward direction and a reverse direction after the disc assembly stops respectively at the start position and end position.
15. The method of any one of Clauses 12-14, wherein engaging the stud engagement element to the stud comprises:
   axially biasing the stud engagement element toward the stud to accommodate differences in protrusion of the stud from the driven nut at different fastener locations.
16. The method of any one of Clauses 12-15, wherein engaging the reaction arm to the external reaction feature comprises:
   rotating the reaction arm toward the reaction feature until received in a cup opening formed on one side of a reaction cup mounted on the reaction arm of a reaction arm assembly.
17. The method of Clause 16, further comprising:
   releasing windup pressure generated in the torque mechanism using a torque windup release mechanism integrated into the reaction arm assembly, to thereby allow for removal of the torque mechanism from the reaction feature and driven fastener after torquing is complete.
18. The method of Clause 17, wherein:
   the torque windup release mechanism comprises a threaded shaft installed in a threaded bore in a cup support fitting located between the reaction cup and the reaction arm, and having a support fitting slot formed in one end of the cup support fitting, and the threaded shaft has a shaft end clamping a reaction cup base portion against an end of a support fitting slot formed in the cup support fitting; and
   releasing the windup pressure comprises rotating the threaded shaft in a direction causing axial retraction of the shaft end by an amount allowing the reaction cup base portion to slide within the support fitting slot.
19. The method of any one of Clauses 12-18, further comprising:
   installing each of the nut clutch and stud clutch in either a first orientation or a second orientation that is a reversal of the first orientation, and such that the orientation of the nut clutch is opposite the orientation of the stud clutch;
   when the nut clutch is installed in the first orientation and the stud clutch is installed in the second orientation, the torque mechanism is in a tightening configuration for tightening a nut on a fastener, and rotation of the nut socket is limited to a first rotational direction; and
   when the nut clutch is installed in the second orientation and the stud clutch is installed in the first orientation, the torque mechanism is in a loosening configuration for loosening a nut on a fastener, and rotation of the nut socket is limited to a second rotational direction opposite the first rotational direction.
20. The method of any one of Clauses 12-19, wherein the torque gun is a programmable electronic torque gun, the method further comprising:
   rotating the nut socket through one or more forward-reverse cycles until a preprogrammed torque level is achieved at the driven nut.

Many modifications and other versions and examples of the disclosure will come to mind to one skilled in the art to which this disclosure pertains having the benefit of the teachings presented in the foregoing descriptions and the associated drawings. The versions and examples described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

## Claims

1. A torque mechanism (102) for use with a torque gun (400) for rotating a driven nut (460) mounted on a stud (462) of a driven fastener (458), comprising:
a reaction arm (110) configured to be mounted to a torque gun housing (414);
a rotatable disc assembly (170), comprising:
a drive disc (180) configured to be mounted to a torque gun drive shaft (422);
a driven disc body (202) coaxially aligned with the drive disc (180);
an arc plate (230) interconnecting the drive disc (180) and the driven disc body (202);
a unidirectional nut clutch (204) supported by the driven disc body (202) and containing a nut socket (206) configured to engage the driven nut (460), and the nut clutch (204) limits rotation of the nut socket (206) to a single direction relative to the disc assembly (170);
a static disc body (242) located between the drive disc (180) and the driven disc body (202) and fixedly coupled to the reaction arm (110); and
a unidirectional stud clutch (246) supported by the static disc body (242) and containing a stud engagement element (260) configured to engage the stud (462), and the stud clutch (246) prevents rotation of the stud engagement element (260) in a same direction as the nut socket (206) when the reaction arm (110) is engaged to an external reaction feature (466).

2. The torque mechanism (102) of Claim 1, further comprising a rotation control circuit (300), including:
at least one proximity sensor (302) mounted on the reaction arm (110), and configured to generate a proximity signal upon sensing the disc assembly (170) at one of a start position (308) and an end position (312) of its rotation; and
at least one relay switch (316) configured to disable a torque gun trigger (424) when the relay switch (316) receives the proximity signal and causes the torque gun drive shaft (422) to stop rotating when the disc assembly (170) arrives at one of the start position (308) and end position (312).

3. The torque mechanism (102) of Claim 2, wherein:
the at least one proximity sensor (302) comprises a pair of proximity sensors (304, 306) mounted on the reaction arm (110) respectively at the start position (308) and end position (312) of the disc assembly (170);
the at least one relay switch (316) comprises a pair of relay switches (318, 320) configured to disable the torque gun trigger (424) upon receiving a proximity signal respectively from the pair of proximity sensors (304, 306) for stopping the disc assembly (170) respectively at the start position (308) and end position (312); and
the rotation control circuit (300) includes a mechanical limit switch (326) configured to be mounted on a torque gun body (402) and actuatable by a torque gun forward/reverse switch (426) in a manner causing the mechanical limit switch (326) to re-enable the torque gun trigger (424) for re-starting rotation of the torque gun drive shaft (422) in one of a forward direction and a reverse direction after the disc assembly (170) stops respectively at the start position (308) and end position (312).

4. The torque mechanism (102) of any one of the preceding Claims, wherein:
the stud engagement element (260) is axially biased toward an opening in the nut socket (206), to accommodate differences in protrusion of the stud (462) from the driven nut (460) at different fastener locations.

5. The torque mechanism (102) of any one of the preceding Claims, wherein:
the reaction arm (110) is part of reaction arm assembly (108) having a reaction cup (130) configured to be coupled to the reaction arm (110) and having a cup opening (132) configured to receive the reaction feature (466) as the reaction arm (110) rotates into the reaction feature (466) after the torque mechanism (102) is engaged to the driven nut (460) and stud (462).

6. The torque mechanism (102) of Claim 5, further comprising:
a torque windup release mechanism (150) integrated into the reaction arm assembly (108) and configured to release windup pressure generated in the torque mechanism (102) during torquing of the driven nut (460), to thereby allow for removal of the torque mechanism (102) from the reaction feature (466) and driven fastener (458); and optionally wherein:
the reaction arm assembly (108) comprises a cup support fitting (142) configured to be mounted on the reaction arm (110) and having a support fitting slot (146) formed in one end of the cup support fitting (142);
the torque windup release mechanism (150) comprises a threaded shaft (152) extendable into a side of the cup support fitting (142);
wherein:
the reaction cup (130) includes a reaction cup base portion (136) configured to be received in the support fitting slot (146), and the reaction cup base portion (136) is shorter than the support fitting slot (146), resulting in a gap between the reaction cup base portion (136) and an end of the support fitting slot (146);
the threaded shaft (152) is rotatable in a manner to clamp the reaction cup base portion (136) against the end of the support fitting slot (146) opposite the threaded shaft (152); and
the threaded shaft (152) is rotatable in a reverse direction in a manner allowing the reaction cup base portion (136) to slide toward the gap in the support fitting slot (146), thereby releasing the windup pressure in the torque mechanism (102).

7. The torque mechanism (102) of any one of the preceding Claims, wherein:
each of the nut clutch (204) and stud clutch (246) is configured to be installed in either a first orientation or a second orientation that is a reversal of the first orientation;
the nut clutch (204) and stud clutch (246) are installed in opposite orientations;
when the nut clutch (204) is installed in the first orientation and the stud clutch (246) is installed in the second orientation, the torque mechanism (102) is in a tightening configuration (104) for tightening a nut (460) on a fastener (458); and
when the nut clutch (204) is installed in the second orientation and the stud clutch (246) is installed in the first orientation, the torque mechanism (102) is in a loosening configuration (106) for loosening a nut (460) on a fastener (458).

8. A torquing system (100) for torquing a driven nut (460) on a stud (462) of a driven fastener (458), comprising:
a torque gun (400) having a torque gun housing (414) and a torque gun drive shaft (422);
a torque mechanism (102) as claimed in any one of the preceding claims.

9. The torquing system (100) of Claim 8, wherein:
the torque gun (400) is a programmable electronic torque gun configured to rotate the torque gun drive shaft (422) through one or more forward-reverse cycles until a preprogrammed torque level is achieved at the driven nut (460).

10. A method of rotating a driven nut (460) on a stud (462) of a driven fastener (458), comprising:
mounting a torque mechanism (102) to a torque gun (400), by:
mounting a reaction arm (110) to a torque gun body (402);
mounting a drive disc (180) to a torque gun drive shaft (422), and the drive disc (180) is part of a disc assembly (170) having a driven disc subassembly (200) having a unidirectional nut clutch (204) containing a nut socket (206);
coupling a static disc subassembly (240) to the reaction arm (110), and the static disc subassembly (240) has a unidirectional stud clutch (246) containing a stud engagement element (260);
engaging the torque mechanism (102) to a driven fastener (458), by:
engaging the stud engagement element (260) to the stud (462);
engaging the nut socket (206) to the driven nut (460);
rotating the driven nut (460), by:
rotating the torque gun drive shaft (422) to cause rotation of the disc assembly (170);
transmitting rotation of the disc assembly (170) to the nut socket (206) via the nut clutch (204), which limits rotation of the nut socket (206) to a single direction relative to the disc assembly (170);
engaging the reaction arm (110) to an external reaction feature (466); and
preventing rotation of the stud (462) in a same direction as the nut socket (206) via the stud clutch (246) and the reaction arm (110).

11. The method of Claim 10, further comprising:
generating, using at least one proximity sensor (302) mounted on the reaction arm (110), a proximity signal upon sensing the disc assembly (170) at one of a start position (308) and an end position (312) of its rotation; and
disabling, using at least one relay switch (316), a torque gun trigger (424) when the relay switch (316) receives the proximity signal, and thereby causing the torque gun drive shaft (422) to stop rotating when the disc assembly (170) arrives at one of the start position (308) and end position (312); and optionally
wherein the steps of generating a proximity signal and disabling a torque gun trigger (424) respectively comprise:
generating a proximity signal by one of a pair of proximity sensors (304, 306) respectively at one of the start position (308) and end position (312);
disabling the torque gun trigger (424) when one of a pair of relay switches (318, 320) receives a proximity signal respectively from one of the pair of proximity sensors (304, 306), and causing the torque gun drive shaft (422) to stop rotating when the disc assembly (170) arrives respectively at one of the start position (308) and end position (312);
further comprising:
moving a torque gun forward/reverse switch (426) between a forward position (310, 314) (438) and a reverse position (440) (310, 314); and
actuating a mechanical limit switch (326) in response to movement of the torque gun forward/reverse switch (426), and re-enabling the torque gun trigger (424) for re-starting rotation of the torque gun drive shaft (422) in one of a forward direction and a reverse direction after the disc assembly (170) stops respectively at the start position (308) and end position (312).

12. The method of Claim 10 or 11, wherein engaging the stud engagement element (260) to the stud (462) comprises:
axially biasing the stud engagement element (260) toward the stud (462) to accommodate differences in protrusion of the stud (462) from the driven nut (460) at different fastener (458) locations.

13. The method of any one of Claims 10-12, wherein engaging the reaction arm (110) to the external reaction feature (466) comprises:
rotating the reaction arm (110) toward the reaction feature (466) until received in a cup opening (132) formed on one side of a reaction cup (130) mounted on the reaction arm (110) of a reaction arm assembly (108).

14. The method of Claim 13, further comprising:
releasing windup pressure generated in the torque mechanism (102) using a torque windup release mechanism (150) integrated into the reaction arm assembly (108), to thereby allow for removal of the torque mechanism (102) from the reaction feature (466) and driven fastener (458) after torquing is complete; and optionally
wherein:
the torque windup release mechanism (150) comprises a threaded shaft (152) installed in a threaded bore in a cup support fitting (142) located between the reaction cup (130) and the reaction arm (110), and having a support fitting slot (146) formed in one end of the cup support fitting (142), and the threaded shaft (152) has a shaft end clamping a reaction cup base portion (136) against an end of a support fitting slot (146) formed in the cup support fitting (142); and
releasing the windup pressure comprises rotating the threaded shaft (152) in a direction causing axial retraction of the shaft end by an amount allowing the reaction cup base portion (136) to slide within the support fitting slot (146).

15. The method of any one of Claims 10-14, further comprising:
installing each of the nut clutch (204) and stud clutch (246) in either a first orientation or a second orientation that is a reversal of the first orientation, and such that the orientation of the nut clutch (204) is opposite the orientation of the stud clutch (246);
when the nut clutch (204) is installed in the first orientation and the stud clutch (246) is installed in the second orientation, the torque mechanism (102) is in a tightening configuration (104) for tightening a nut (460) on a fastener (458), and rotation of the nut socket (206) is limited to a first rotational direction (428); and
when the nut clutch (204) is installed in the second orientation and the stud clutch (246) is installed in the first orientation, the torque mechanism (102) is in a loosening configuration (106) for loosening a nut (460) on a fastener (458), and rotation of the nut socket (206) is limited to a second rotational direction (430) opposite the first rotational direction (428); or optionally
wherein the torque gun (400) is a programmable electronic torque gun, the method further comprising:
rotating the nut socket (206) through one or more forward-reverse cycles until a preprogrammed torque level is achieved at the driven nut (460).
